# EUROPEAN PATENT SPECIFICATION

(11) **EP 2 383 484 B1**
(45) Date of publication and mention of the grant of the patent: **05.06.2013**
(21) Application number: 11163120.6
(22) Date of filing: 20.04.2011
(51) Int. Cl.: F16D 43/18

(54) **Centrifugal shoe clutch structure**
Zentrifugale Schuh-Kupplungsstruktur
Structure d'embrayage à patin centrifuge

(30) Priority: 28.04.2010 JP 2010103277
(43) Date of publication of application: 02.11.2011
(73) Proprietor: Honda Motor Co., Ltd., Tokyo 107-8556 (JP)
(72) Inventor: Hongo, Takaharu c/o HONDA R&D CO., LTD., Saitama 351-0193 (JP); Komuro, Hirokazu c/o HONDA R&D CO., LTD., Saitama 351-0193 (JP); Nukada, Yoshitaka c/o HONDA R&D CO., LTD., Saitama 351-0193 (JP); Narita, Masaaki c/o HONDA R&D CO., LTD., Saitama 351-0193 (JP); Maekawa, Keiichi c/o HONDA R&D CO., LTD., Saitama 351-0193 (JP); Imamura, Tetsuya c/o HONDA R&D CO., LTD., Saitama 351-0193 (JP); Matsuura, Kohei c/o HONDA R&D CO., LTD., Saitama 351-0193 (JP)
(74) Representative: Ilgart, Jean-Christophe

(56) References cited:
- DE-A1- 2 009 607
- FR-A- 1 172 593
- GB-A- 496 800
- GB-A- 933 615
- JP-A- 7 119 764
- JP-A- 8 061 384
- US-A- 4 294 342

## Description

### [Technical Field]

The present invention relates to a centrifugal shoe clutch structure for a centrifugal shoe clutch, which prevents what is termed as clutch squeak from occurring due to vibrations of a clutch outer.

### [Background Art]

Conventionally, as is sometimes the case, a dry-type centrifugal shoe clutch squeaks due to vibrations of the clutch outer while the friction members lining the centrifugal clutch shoes are in contact with and sliding on the inner peripheral surface of the drum portion of the clutch outer, after the friction members come in contact with the inner peripheral surface of the drum portion, but until the friction members are fully engagingly connected with the inner peripheral surface. Against this background, a conventional practice for the purpose of preventing the clutch squeak on occasions such as the clutch connection is to weld a vibration-isolating ring to the outer periphery of the clutch outer, as shown in Patent Document 1 given below, for example.

### [Prior Art Document]

[Patent Document 1] Japanese Patent Application
   Publication No. 2005-233232 (Figs. 2 to 4) Documents GB 933 615 and US 4 294 342 also disclose a relevant prior art.

### [Summary of the Invention]

### [Problems to be Solved by the Invention]

Nevertheless, in the case where, as shown in Patent Document 1 given above, the vibration-isolating ring is welded to the outer periphery of the clutch outer, the manufacturing process of the clutch becomes complicated, and requires higher precision for the press-fit interference and position, as well as accordingly pushes up the costs.
An object of the present invention is to provide a centrifugal shoe clutch structure: whose productivity is higher; whose costs are checked; and which is capable of reducing vibrations of the clutch outer and preventing clutch squeak.

### [Means for Solving the Problems]

For the purpose of solving the above-mentioned problems, an invention described in claim 1 provides a centrifugal shoe clutch structure

The invention described in claim 2 provides the centrifugal shoe clutch structure according to claim 1, wherein in the balance hole, a remaining thickness between a bottom of the balance hole and the inner peripheral surface of the drum portion and a remaining thickness between an edge of the balance hole and an end surface of the drum portion both are thicker than the thickness of the connecting wall portion.

The invention described in claim 3 provides the centrifugal shoe clutch structure according to claim 1, wherein a vibration-isolating wall extending toward an inner periphery is integrally formed on the end surface of the drum portion.

The invention described in claim 4 provides the centrifugal shoe clutch structure according to claim 3, wherein the vibration-isolating wall is provided with a notched groove which is recessed from its inner peripheral end in the outer peripheral direction.

The invention described in claim 5 provides the centrifugal shoe clutch structure according to claim 1, wherein the cylinder-shaped friction surface of the drum portion is provided with oblique grooves which are oriented oblique to the circumferential direction.

The invention described in claim 6 provides the centrifugal shoe clutch structure according to claim 1, wherein the drum portion is provided with natural frequency adjusting holes which extend in an axial direction of the clutch outer.

The invention described in claim 7 provides the centrifugal shoe clutch structure according to claim 6, wherein the natural frequency adjusting holes are provided in a way that their phases in a circumferential direction of the drum portion are set up in unequal intervals.

The invention described in claim 8 provides the centrifugal shoe clutch structure according to any one of claims 6 and 7, wherein the natural frequency adjusting holes are provided in a portion of the drum portion, which continues to the connecting wall portion, in order that an end surface portion of the drum portion is not opened.

The invention described in claim 9 provides the centrifugal shoe clutch structure according to any one of claims 1 to 8, wherein the friction members are those which are made by hardening paper-based inorganic fibers with a thermosetting resin, and are provided on outer peripheries of the clutch shoes, respectively.

The invention described in claim 10 provides the centrifugal shoe clutch structure according to any one of the claims 1 to 9, wherein the cast iron material is a spheroidal graphite cast iron, and the clutch outer is formed in a way that spheroidal graphite contained therein is distributed unevenly in the circumferential direction of the drum portion.

The invention described in claim 11 provides the centrifugal shoe clutch structure according to claim 10, wherein the cylinder-shaped friction surface of the drum portion is shaped like a cylinder by machining.

### [Effects of the Invention]

The centrifugal shoe clutch structure of the invention of claim 1 enhances the productivity of the clutch and reduces the costs, because the boss portion, the drum portion and the connecting wall portion of the clutch outer are integrally cast by use of the same cast ion material by casting. In addition, unlike in a case where a vibration-isolating ring is attached to a clutch outer, things such as variation in the interference width due to strain resulting from heat of the friction between the clutch outer and the clutch shoes do not occur, as well as the vibration damping effect becomes stable. Furthermore, because the clutch outer is integrally cast by casting, the shape which enhances the vibration-isolating effect can be formed easily. Accordingly, the enhanced vibration-isolating effect together with the cast iron's high vibration-reducing effect heightens the effect of preventing the clutch squeak.

The invention of claim 1 additionally enables only the key portion to be easily formed thicker by casting. Thereby, when the natural frequency of the clutch outer is set satisfactorily, the vibration-damping effect is enhanced, and concurrently the weight of the clutch outer is reduced.

The invention of claim 1 additionally makes it easy to process the balance holes, and reduces the vibrations attributable to the rotation of the clutch outer because the balance holes, which are configured to adjust the balance of the clutch outer, are processed in the drum portion formed thicker.

The invention of claim 2 brings about the effects of the invention of claim 1, as well as additionally: keeps the thickness of the bottom of each balance hole in the drum portion, and the thickness between each balance hole and the end surface of the drum portion; and accordingly prevents the influence of the balancing process on the rotational strength of the clutch outer.

The invention of claim 3 brings about the effects of the invention of claim 1, and additionally enables the vibration-isolating wall to be easily formed by casting. For this reason, the vibration-isolating wall enhances the vibration reducing effect, reinforces the drum portion, and increases the strength of the clutch outer.

The invention of claim 4 brings about the effects of the invention of claim 3, as well as additionally enables the natural frequency of the vibration-isolating wall to be set satisfactorily by providing the notched grooves in the vibration-isolating wall, and thereby enhances and improves the strength and vibration-isolating performance of the clutch outer in a well-balanced manner.
In addition, when the notched grooves are provided in a way to reach a portion closer to the outer periphery beyond a position of the cylinder-shaped friction surface in the radial direction of the clutch outer, abrasion powder of the friction members of the respective clutch shoes is discharged; a frictional engagement force becomes stable; it becomes easy to control the frequency which occurs due to the sliding movement on the cylinder-shaped friction surface; and it becomes easy to make a setup for avoidance of its resonance with the natural frequency of the clutch outer.
Furthermore, the vibration reducing effect is enhanced when: intervals between the notched grooves are unequalized; the vibration nodes are changed; and unbalance is adjusted by use of the balance holes.

The invention of claim 5 brings about the effects of the invention of claim 1, as well as additionally: makes it possible to easily form the oblique grooves by casting; thereby enhances the vibration reducing effect by use of the oblique grooves, thus prevents the clutch squeak ; enables abrasion powder of the friction members of the respective clutch shoes to be discharged; stabilizes the frictional engagement force; makes it easy to control the frequency which occurs due to the sliding movement on the cylinder-shaped friction surface; and makes it easy to make a setup for avoidance of the resonance with the natural frequency of the clutch outer.

The invention of claim 6 brings about the effects of the invention of claim 1, as well as additionally allows the natural frequency of the clutch outer to be satisfactorily set by use of the natural frequency adjusting holes, and thereby prevents the clutch squeak resulting from the resonance with the frequency which occurs due to the sliding movement on the clutch shoes during the clutch connection.

The invention of claim 7 brings about the effects of the invention of claim 6, as well as additionally: inhibits the natural vibration of the clutch outer; more inhibits the resonance with the frequency which occurs due to the sliding movement on the clutch shoes; and more reduces the clutch squeak.

The invention of claim 8 brings about the effects of the invention of any one of claims 6 and 7, as well as additionally decreases stress in the end surface portion of the drum portion, and prevents the clutch squeak, because of the structure in which the end surface portion thereof is closed.

The invention of claim 9 brings about the effects of the invention of any one of claims 1 to 8, additionally can prevent the clutch squeak even though: the friction members made by hardening the paper-based inorganic fibers with the thermosetting resin generally have a relatively small coefficient of friction because of their relatively hard quality; and the clutch connection is performed at a high rotational speed for the purpose of increasing the transmission force. That is because the friction members are used together with the clutch outer which prevents the clutch squeak. This enables the friction members made by hardening the paper-based inorganic fibers with the thermosetting resin, which have higher wear resistance, to be used as the friction members to be provided on the outer peripheries of the clutch shoes. Accordingly, the durability of the centrifugal shoe clutch is enhanced, and the costs are reduced.

The invention of claim 10 brings about the effects of the invention of any one of claims 1 to 9, and additionally increases the strength of the clutch outer because the spheroidal graphite cast iron is used as the cast iron material. In addition, the lubrication action of the spheroidal graphite, which is the internal component of the clutch outer made of the spheroidal graphite cast iron, stabilizes the characteristics of the sliding of the clutch shoes on the cylinder-shaped friction surface, and thus makes it easy to control the frequency which occurs due to the sliding movement thereon, as well as accordingly makes it easy to make a setup for avoidance of the resonance with the natural frequency of the clutch outer. Furthermore, the vibration damping effect resulting from the change in the density of the spheroidal graphite depending on the locations enhances the effect of preventing the clutch squeak.

The invention of claim 11 brings about the effects of the invention of claim 10, and additionally can keep the characteristic of preventing the clutch squeak high from the beginning of the use of the clutch because, from the beginning, the spheroidal graphite is exposed in the cylinder-shaped friction surface by machining.

### [Brief Description of the Drawings]

Fig. 1 is a left side cutaway view showing a power unit, which is formed from an internal combustion engine and a transmission system connected to the internal combustion engine with a centrifugal shoe clutch structure of Embodiment 1 of the present invention included in the power unit, in a posture in which the power unit is mounted on a vehicle.
Fig. 2 is a cross-sectional development view of the power unit taken almost along the II-II arrow of Fig. 1. Incidentally, Fig. 1 is the view of the power unit taken almost along the I-I arrow of Fig. 2.
Fig. 3 is a magnified cross-sectional view of the power unit taken along the III arrow of Fig. 2.
Fig. 4 is a cross-sectional view of a clutch outer of Embodiment 1, which is shown in the same direction as the clutch outer is shown in Fig. 3.
Fig. 5 is a front view of the clutch outer of Embodiment 1 taken along the V-V arrow of Fig. 4. Incidentally, Fig. 4 is the view of the clutch outer taken along the IV-IV arrow of Fig. 5.
Fig. 6 is a cross-sectional view of a clutch outer of Embodiment 2 of the present invention, which is shown in the same direction as the clutch outer is shown in Fig. 3.
Fig. 7 is a front view of the clutch outer of Embodiment 2 taken along the VII-VII arrow of Fig. 6. Incidentally, Fig. 6 is the view of the clutch outer taken along the VI-VI arrow of Fig. 7.
Fig. 8 is a cross-sectional view of a clutch outer of Embodiment 3 of the present invention, which is shown in the same direction as the clutch outer is shown in Fig. 3.
Fig. 9 is a front view of the clutch outer of Embodiment 3 taken along the IX-IX arrow of Fig. 8. Incidentally, Fig. 8 is the view of the clutch outer taken along the VIII-VIII arrow of Fig. 9.
Fig. 10 is a partial cross-sectional view of the clutch outer of Embodiment 3 taken along the X-X arrow of Fig. 8, and concurrently shows a cross section of an oblique groove.
Fig. 11 is a cross-sectional view of a clutch outer of Embodiment 4 of the present invention, which is shown in the same direction as the clutch outer is shown in Fig. 3.
Fig. 12 is a front view of the clutch outer of Embodiment 4 taken along the XII-XII arrow of Fig. 11. Incidentally, Fig. 11 is the view of the clutch outer taken along the XI-XI arrow of Fig. 12.
Fig. 13 is a cross-sectional view of a clutch outer of Embodiment 5 of the present invention, which is shown in the same direction as the clutch outer is shown in Fig. 3.
Fig. 14 is a front view of the clutch outer of Embodiment 5 taken along the XIV- XIV arrow of Fig. 13. Incidentally, Fig. 13 is the view of the clutch outer taken along the XIII-XIII arrow of Fig. 14.
Fig. 15 is a cross-sectional view of a clutch outer of a modification of Embodiment 5, which is shown in the same direction as the clutch outer is shown in Fig. 3.
Fig. 16 is a front view of the clutch outer of the modification of Embodiment 5 taken along the XVI- XVI arrow of Fig. 15. Incidentally, Fig. 15 is the view of the clutch outer taken along the XV-XV arrow of Fig. 16.
Fig. 17 is an image view of the distribution of spheroidal graphite in the clutch outer as an example of Embodiment 6 of the present invention.
Fig. 18 is an image view of the distribution of spheroidal graphite in the clutch outer as another example of Embodiment 6 of the present invention.

### [Modes for Carrying Out the Invention]

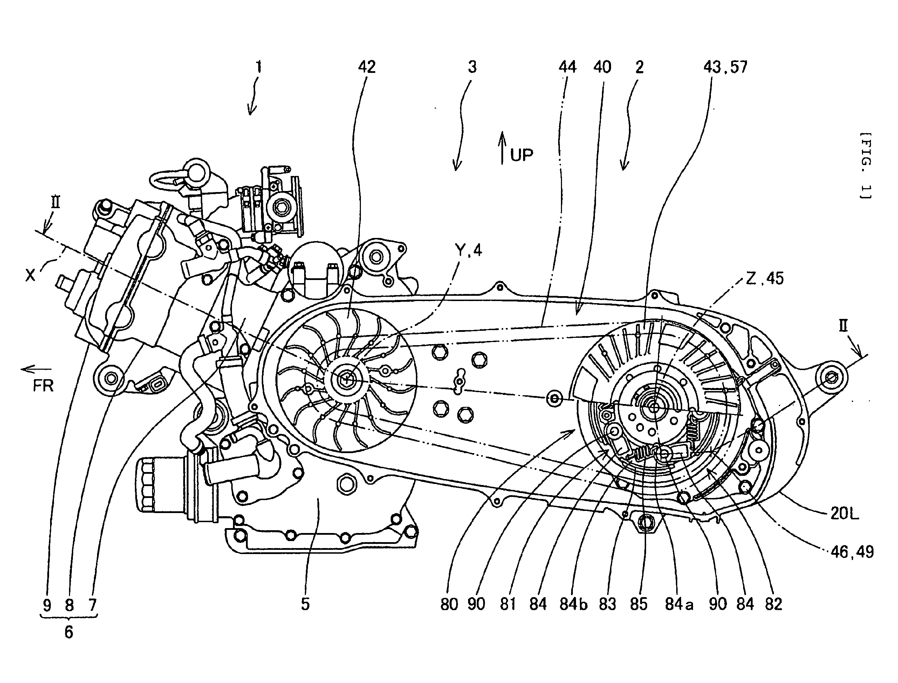

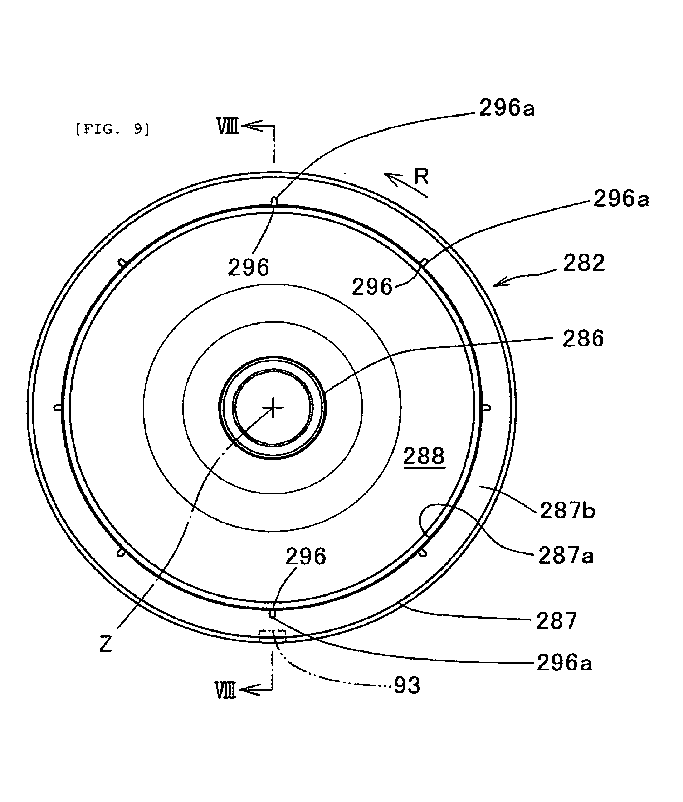

Explanation will be provided for a centrifugal shoe clutch structure of an embodiment of the present invention on the basis of Figs. 1 to 18.
It should be noted that the frontward, rearward, leftward, rightward, upward, downward and other directions mentioned in the explanation of this description are based on the direction of a vehicle, such as a motorcycle, on which a power unit including a centrifugal shoe clutch structure of each embodiment is mounted.
In the drawings, an arrow FR indicates the front side of the vehicle; an arrow LH indicates the left side of the vehicle; an arrow RH indicates the right side of the vehicle; and an arrow UP indicates the upper side of the vehicle.

Figs. 1 to 5 are related to Embodiment 1 of the present invention. Fig. 1 shows a power unit 3, which is formed from an internal combustion engine 1 and a transmission system 2 connected to the internal combustion engine 1 with a centrifugal shoe clutch structure of this embodiment included in the power unit 3, in a posture in which the power unit 3 is mounted on a vehicle (not illustrated).
In this embodiment, the vehicle is a scooter-type motorcycle.

The power unit 3 of this embodiment is formed from the front-located internal combustion engine 1 and the rear-located transmission system 2. The internal combustion engine 1 is supported by a vehicle body frame of the scooter-type motorcycle (not illustrated) in a way to be not swingable.
The internal combustion engine 1 is a four-stroke cycle two-cylinder internal combustion engine. When mounted on the vehicle, as shown in Fig. 1, the internal combustion engine 1 makes an axis Y of a crankshaft 4 orthogonal to the frontward/rearward diction of the vehicle and thus oriented in a vehicle widthwise direction, as well as includes a cylinder unit 6 which protrudes obliquely upward from a crankcase 5 with a cylinder axis X tilted forward.

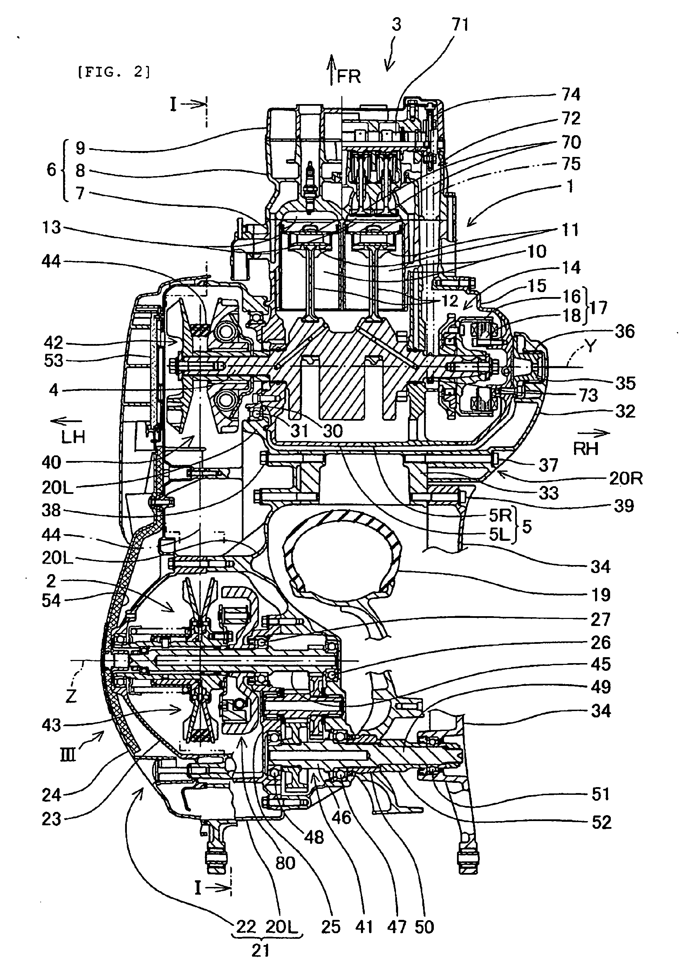

As shown in Figs. 1 and 2, the internal combustion engine 1 is formed from the crankcase 5 and the cylinder unit 6. The cylinder unit 6 is constructed by: sequentially stacking a cylinder block 7 and a cylinder head 8 on the crankcase 5 obliquely upward; integrally fastening the crankcase 5, the cylinder block 7 and the cylinder head 8 together; and putting a cylinder head cover 9 over the cylinder head 8.

The cylinder block 7 includes paired cylinder bores 10, 10 which are in parallel with each other.
The crankcase 5 movably and rotatably supports the crankshaft 4 connected to pistons 11, 11 by use of connecting rods 12, 12. The pistons 11, 11 are slidably fitted in the cylinder bores 10, 10.
The cylinder head 8 forms combustion chambers 13, 13 between the cylinder head 8 and the cylinder block 7. The pistons 11, 11 face the combustion chambers 13, 13.
The cylinder head cover 9 is connected to a portion of the cylinder head 8, which is opposite from the cylinder block 7.

The crankcase 5 is constructed by connecting a left crankcase 5L and a right crankcase 5R together. A right case cover 15 is fastened to a right portion of the right crankcase 5R. A generator chamber 14 is formed between the right crankcase 5R and the right case cover 15.
In the generator chamber 14, an outer rotor 16 is fixed to the crankshaft 4, and an inner stator 18 constitutes an AC generator 17 in cooperation with the outer rotor 16 is fixed to the right case cover 15.

A front portion of a left rear arm 20L disposed to the left of the rear wheel 19 and a front portion of a right rear arm 20R disposed to the right of the rear wheel 19 are movably supported by the crankcase 5 in the internal combustion engine 1 in a way that the left rear arm 20L and the right rear arm 20 R are swingable upward and downward around the axis Y of the crankshaft 4. The rear wheel 19 is movably supported between the rear portions of the respective left and right rear arms 20L, 20R.

The left rear arm 20L constitutes a part of a transmission case 21 which includes the transmission system 2 in its inside. The transmission system 2 is configured to transmit a motive power from the internal combustion engine 1 to the rear wheel 19.
The transmission case 21 is formed from the left rear arm 20L and a cover 22 configured to cover the left rear arm 20L from its left outside.
The cover 22 includes: a cover inner wall 23 fastened to the left rear arm 20L; and a cover outer wall 24 fastened to the cover inner wall 23 with a space interposed between the cover outer wall 24 and an outer surface of the cover inner wall 23.

A ring-shaped supporting member 30 is fastened to a left outer surface of the left crankcase 5L in the crankcase 5 in a way that the supporting member 30 coaxially surrounds the crankshaft 4 which rotatably penetrates the left crankcase 5L and enters the transmission case 21.
A front portion of the left rear arm 20L is movably and rotatably supported by the supporting member 30 with a ball bearing 31 interposed in between.

The right rear arm 20R is formed from a frontal arm member 32, an intermediate arm member 33 and a rearward arm member 34. The frontal arm member 32 is movably supported by the crankcase 5 in a way to be swingable upward and downward. The intermediate arm member 33 is detachably connected to the frontal arm member 32. The rearward arm member 34 is detachably connected to the intermediate arm member 33.

The frontal arm member 32 is formed in a way that the frontal arm member 32 starts at the right-side portion of the right case cover 15 and reaches the rear portion of the crankcase 5. A front portion of the frontal arm member 32 is movably and rotatably supported by a pivot shaft 35 with a roller bearing 36 interposed in between. The pivot shaft 35 is fastened to an outer surface of the right case cover 15 coaxially with the crankshaft 4.

The intermediate arm member 33 is disposed between the internal combustion engine 1 and the rear wheel 19. The frontal arm member 32 is detachably connected to a right end portion of the intermediate arm member 33 by use of multiple bolts 37.
The left rear arm 20L is detachably connected to a left end portion of the intermediate arm member 33 by use of multiple bolts 38.
In other words, the left and right rear arms 20L, 20R are movably supported by the internal combustion engine 1 in a way that: the left and right rear arms 20L, 20R are connected together between the internal combustion engine 1 and the rear wheel 19; distortion is prevented from occurring between the left and right rear arms 20L, 20R; and the left and right rear arms 20L, 20R are swingable upward and downward around the axis Y of the crankshaft 4.

Independently of the frontal arm member 32, the rearward arm member 34 of the right rear arm 20R is detachably connected to a right end portion of the intermediate arm member 33 by use of multiple bolts C39.
In other words, the rearward arm member 34 is detachably connected to the intermediate arm member 33 in a way that: the rearward arm member 34 keeps the frontal arm member 32 connected to the left rear arm 20L with the intermediate arm member 33 interposed in between; and when the bolts C39 are removed, the rearward arm member 34 becomes detachable from the frontal arm member 32.

The transmission system 2 is formed from a transmission 40, a deceleration gear train 41, and a centrifugal shoe clutch 80 provided between the transmission 40 and the deceleration gear train 41. The transmission is configured to change the speed of the motive power from the crankshaft 4 continuously. The deceleration gear train 41 is configured to decelerate the output of the transmission 40, and to transmit the resultant output to the rear wheel 19. Descriptions will be provided the centrifugal shoe clutch 80 later.

The transmission 40 is of a publicly-known belt type in which : an endless belt 44 is wound between a driving pulley 42 provided to the crankshaft 4 and a driven pulley 43; and the driven pulley 43 is connected to a transmission output shaft 45 in a way to be alongside of the centrifugal shoe clutch 80.
As the number of revolutions of the crankshaft 4 increases, the effective diameter of the driving pulley 42 increases, and the effective diameter of the driven pulley 43 accordingly decreases. Thereby, the transmission gear ratio can be changed from LOW to TOP continuously.

Inside the transmission case 21, a supporting wall 25 is fastened to the left rear arm 20L, and the transmission output shaft 45 is movably and rotatably supported by the left rear arm 20L and the supporting wall 25 with ball bearings 26, 27 interposed in between, respectively.
The deceleration gear train 41 is provided between the transmission output shaft 45 and a final output shaft 46 which is a final output terminal of the transmission system 2, and is housed between the left rear arm 20L and the supporting wall 25.

The final output shaft 46 is movably and rotatably supported by the left rear arm 20L with a ball bearing 47 interposed in between, as well as is movably and rotatably supported by the supporting wall 25 with a ball bearing 48 interposed in between. An axle 49 is coaxially and integrally connected to the final output shaft 46.

The axle 49 penetrates a hub 50 of the rear wheel 19 attached to a right portion of an inner race of the ball bearing 47. The axle 49 and the hub 50 are spline-connected together in a way to be not rotatable relative to each other.
In addition, the axle 49 is movably and rotatably supported by the rearward arm member 34 of the right rear arm 20R with a ball bearing 51 interposed in between. A cylinder-shaped spacer 52 configured to surround the axle 49 is installed between an inner race of the ball bearing C51 and the hub 50.

In a front portion of the transmission case 21, a cooling air cleaner 53 is provided between the cover inner wall 23 and the cover outer wall 24. The air for cooling the transmission 40 of a belt type is introduced into the transmission case 21 from the outside of the transmission case 21 through the cooling air cleaner 53.
Furthermore, in a rear portion of the transmission case 21, a sound absorbing material 54 is provided between the cover inner wall 23 and the cover outer wall 24. Thus, the cover 22 in the rear portion of the transmission case 21 is formed having a sound absorbing structure.

In the cylinder head 8 of the internal combustion engine 1, paired intake valves 70 configured to control the air to be taken into one of combustion chambers 13, 13 are allocated to each combustion chamber 13, as well as paired exhaust valves (not illustrated) configured to control the air to be exhausted from one of the combustion chambers 13, 13 are allocated to each combustion chamber 13.
In addition, an intake-side camshaft 71 configured to drive each intake valve 70 to open and close, as well as an exhaust-side camshaft (not illustrated) configured to drive each exhaust valve to open and close, are movably supported by the cylinder head 8 in a way that the intake-side camshaft 71 and the exhaust-side camshaft each have an axis which is parallel to the crankshaft 4. A chain chamber 72 facing an end of the intake-side camshaft 71 and an end of the exhaust-side camshaft is provided communicating with the generator chamber 14 through the crankcase 5, the cylinder block 7, the cylinder head 8 and the cylinder head cover 9.

A driving sprocket 73 is integrally provided to a portion of the crankshaft 4 which corresponds to the chain chamber 72. An endless timing chain 75 configured to run in the chain chamber 72 is wound around a driven sprocket 74 fixed to an end of the intake-side camshaft 71, a driven sprocket (not illustrated) fixed to an end of the exhaust-side camshaft, and the driving sprocket 73.

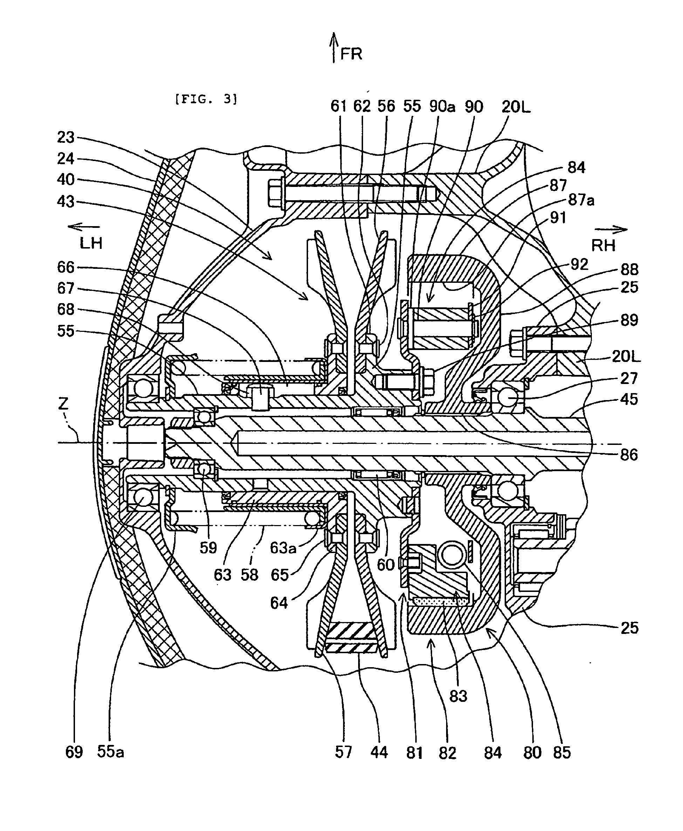

As shown in Fig. 3, the driven pulley 43 constituting a part of the transmission 40 includes: a fixation-side pulley half body 56 fixed to a rotary cylinder 55 rotatable relative to the transmission output shaft 45 and coaxial with an axis Z of the transmission output shaft 45; and a movable-side pulley half body 57 capable of coming closer to and away from the fixation-side pulley half body 56. The movable-side pulley half body 57 is biased toward the fixation-side pulley half body 56 by a spring 58.

The rotary cylinder 55 is disposed surrounding the transmission output shaft 45 coaxially. The rotary cylinder 55 is supported by the transmission output shaft 45 with a ball bearing 59 and a roller bearing 60 interposed in between in a way that: the rotary cylinder 55 is rotatable relative to the transmission output shaft 45; and the rotary cylinder 55 is immovable relative to the transmission output shaft 45 in an axial direction. Concurrently, a left end of the rotary cylinder 55 is supported by the cover inner wall 23 with a ball bearing 69 interposed in between.
The fixation-side pulley half body 56 is connected to a flange portion 61 included in the rotary cylinder 55 by use of multiple rivets 62.

A slidable cylinder 63 is put on an outer periphery of the rotary cylinder 55 in a way to be slidable in the axial direction. The movable-side pulley half body 57 is connected by use of multiple rivets 65 to a flange portion 64 included in the slidable cylinder 63.
In addition, the slidable cylinder 63 is provided with a guide hole 66 extending long in the axial direction. A roller 68 supported by the rotary cylinder 55 in a way to pivot around a spindle 67 is inserted in the guide hole 66 in order to make it impossible for the slidable cylinder 63 to rotate relative to the rotary cylinder 55, and in order to make it possible for the slidable cylinder 63 to move relative to the rotary cylinder 55 in the axial direction.

A spring bearing member 55a is put on a portion of the outer periphery of the rotary cylinder 55 which is opposite from the centrifugal shoe clutch 80. The spring 58 is installed between the spring bearing member 55a and a spring bearing member 63a put on the slidable cylinder 63.
Because of the foregoing structure, the driven pulley 43 operates to decrease the diameter with which the endless belt 44 is wound around the driven pulley 43 according as the driving pulley 42 increases the diameter with which the endless belt 44 is wound around the driving pulley 42 in proportion to the increase in the number of revolutions of the crankshaft 4.

As shown in Figs. 2 and 3, the centrifugal shoe clutch 80 of this embodiment includes: a clutch inner 81 connected to the rotary cylinder 55 (an "input rotary member" of the present invention); and a clutch outer 82 spline-connected to the transmission output shaft 45 (an "output rotary member" of the present invention), and provided surrounding an outer peripheral portion of the clutch inner 81.

Multiple centrifugal clutch shoes 84, for example, five centrifugal clutch shoes 84 ("clutch shoes" of the present invention) and clutch springs 85 are held by the clutch inner 81. Each centrifugal clutch shoe 84 includes a friction member 83 capable of frictionally engaging with the clutch outer 82, as well as is movably and rotationally supported by the clutch inner 81. The clutch springs 85 are configured to bias the centrifugal clutch shoes 84 in a direction in which the frictional engagement of the friction members 83 with the clutch outer 82 is released.
The clutch outer 82 is connected to the clutch inner 81 when the centrifugal force of the rotation of the clutch inner 81 causes the clutch shoes 84 to rotationally move in the outer peripheral direction. Thus, the rotational driving force of the clutch inner 81 is transmitted to the clutch outer 82.

The clutch outer 82 is formed from a boss portion 86, a drum portion 87 and a connecting wall portion 88. The boss portion 86 is spline-fitted to the transmission output shaft 45. An inner peripheral surface of the drum portion 87 constitutes a cylinder-shaped friction surface 87a configured to come into contact with the centrifugal clutch shoes 84. The connecting wall portion 88 connects the boss portion 86 and the drum portion 87 together. The boss portion 86, the drum portion 87 and the connecting wall portion 88 are integrally cast by use of the same cast iron material by casting.
In other words, the clutch outer 82 is made of a cast iron, and is shaped almost like a bowl by integrally forming an end of the cylinder-shaped drum portion 87 in an outer periphery of the connecting wall portion 88 shaped like a circular plate. Concurrently, the cylinder-shaped boss portion 86 is integrally formed in an inner periphery of the connecting wall portion 88.

Furthermore, the boss portion 86 is fixed to the transmission output shaft 45 by spline. The clutch outer 82 is connected to the transmission output shaft 45 serving as the output rotary member of the centrifugal shoe clutch 80.
Incidentally, it is particularly desirable that the cast iron material should be a spheroidal graphite cast iron. In this embodiment, FCD600 or FCD700 (JIS) is used as the spheroidal graphite cast iron.

Moreover, the clutch inner 81 is shaped like a circular plate in a way to be opposed to the connecting wall portion 88 of the clutch outer 82. The clutch inner 81 is connected to an end portion of the rotary cylinder 55 serving the input rotary member of the centrifugal shoe clutch 80 by use of multiple bolts 89.
Base portions of support pins 90 are fixed to multiple portions of the clutch inner 81, for example, five portions thereof, which are set up at equal intervals in a circumferential direction of the clutch inner 81. Each support pin 90 has an axis which is parallel with the axis Z of the transmission output shaft 45 and the rotary cylinder 55, as well as includes a collar portion 90a configured to be in slide-contact with a surface of a corresponding one of the centrifugal clutch shoes 84 which is closer to the clutch inner 81.

The centrifugal clutch shoes 84 and a ring-shaped side plate 91 are located and housed inside the clutch outer 82. The side plate 91 is opposed to the portions of the centrifugal clutch shoes 84 which are opposite from the clutch inner 81.
Retaining rings 92 to engage with the side plate 91 are fittingly attached to front end portions of the support pins 90 to be inserted in base portions of the centrifugal clutch shoes 84 and the side plate 91, respectively.

In other words, the base portions of the centrifugal clutch shoes 84 interposed between the collar portions 90a of the support pins 90 and the side plate 91 are movably and rotatably supported by five portions of the clutch inner 81, which are set up in the circumferential direction of the clutch inner 81, by use of the support pins 90, respectively. The centrifugal clutch shoes 84 are rotationally movable in an outer peripheral direction and in an inner peripheral direction with respect to the axis Z of the clutch inner 81.
The centrifugal clutch shoes 84 are made of metal such as a zinc alloy, and are shaped like a shoe. Each centrifugal clutch shoe 84 has the friction member 83 in its outer peripheral portion. The friction members 83 are capable of coming away from and closer to, as well as frictionally engaging with, the inner peripheral surface of the drum portion 87, that is to say, the cylinder-shaped friction surface 87a when the centrifugal clutch shoes 84 rotationally move around the support pin 90, respectively (see Figs. 1 and 3).

It should be noted that, as lined members or attached members, the friction members 83 may be provided to the centrifugal clutch shoes 84 by appropriate means such as adhesion, baking, fitting and riveting, although the friction members 83 line the outer peripheral surfaces of the centrifugal clutch shoes 84 in Embodiment 1.
In addition, it is desirable that the friction members 83 should be those which are obtained by hardening paper-based inorganic fibers with a thermosetting resin. It is a matter of course that the friction members 83 may be made of any other material which is usually used.

Furthermore, one clutch spring 85 is suspended between a base portion 84a of one of each two neighboring centrifugal clutch shoes 84, 84 in the circumferential direction of the clutch inner 81 and an intermediate portion 84b of the other of the two neighboring centrifugal clutch shoes 84, 84 (see Fig. 1). The clutch springs 85 bias the centrifugal clutch shoes 84, respectively, in order that the centrifugal clutch shoes can rotationally move in a direction in which the friction members 83 come away from the cylinder-shaped friction surface 87a on the inner peripheral surface of the drum portion 87 of the clutch outer 82, that is to say, in the inner peripheral direction.

However, the centrifugal clutch shoes 84 overcome the biasing forces of the clutch springs 85 because of the effect of the centrifugal forces which increase according as the number of revolutions of the clutch inner 81, that is to say, the number of revolutions of the rotary cylinder 55 serving as the input rotary member increases. Thus, the centrifugal clutch shoes 84 rotationally move in a direction in which the friction members 83 frictionally engage with the cylinder-shaped friction surface 87a of the drum portion 87, that is to say, in the outer peripheral direction. Accordingly, the clutch inner 81 and the clutch outer 82 are connected together.
Moreover, once the number of revolutions of the clutch inner 81 decreases and the biasing forces of the clutch springs 85 accordingly exceed the centrifugal forces working on the centrifugal clutch shoes 84 due to their decrease, the centrifugal clutch shoes 84 rotationally move in the inner peripheral direction, and the friction members 83 come away from the cylinder-shaped friction surface 87a. Thus, the connection of the clutch inner 81 and the clutch outer 82 is released.

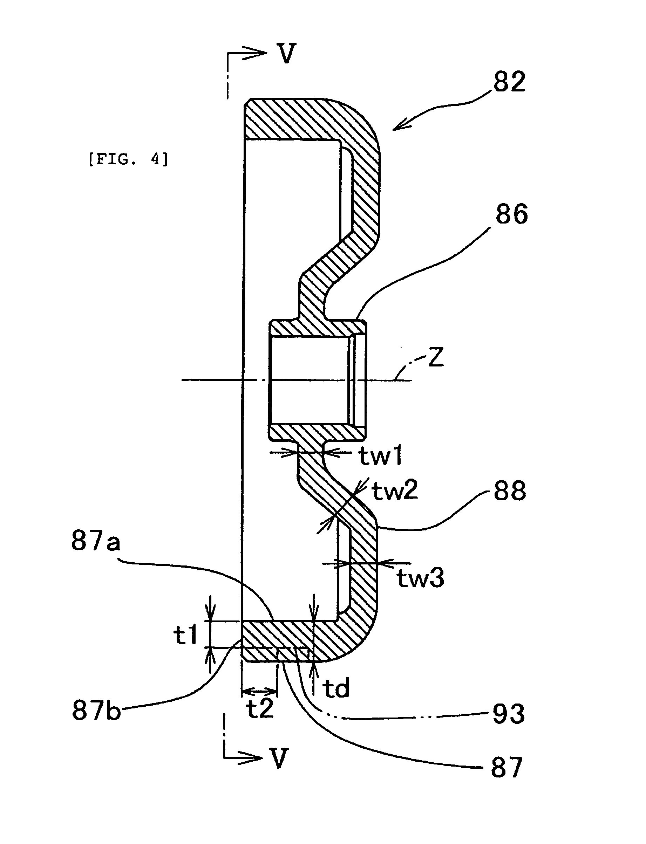

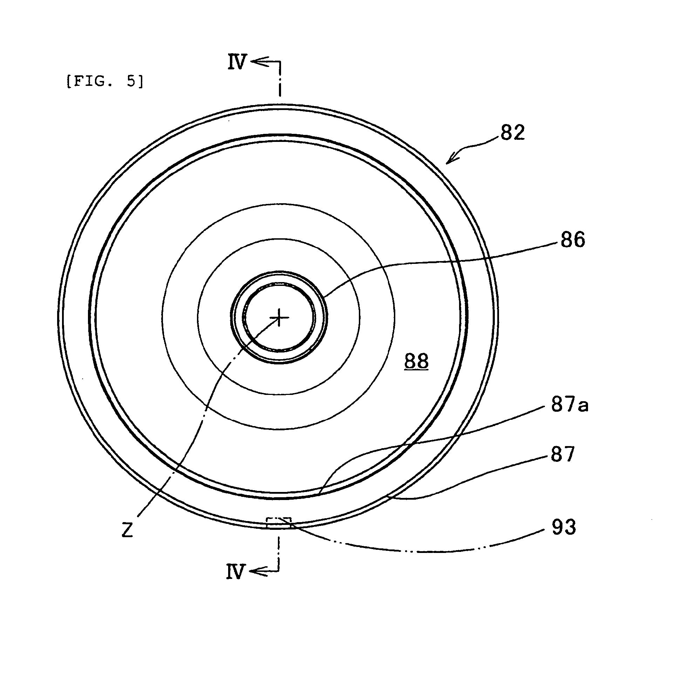

Explanation will be provided for features of the centrifugal shoe clutch structure of Embodiment 1 by use of Figs. 4 and 5 each showing only the clutch outer 82 of Embodiment 1 shown in Figs. 1 to 3. The structure, exclusive of the clutch outer 82, is as explained while showing the structure in Figs. 1 to 3.
As described above, the centrifugal shoe clutch 80 is coaxially formed on the transmission output shaft 45. For this reason, the axes of the centrifugal shoe clutch 80, its clutch inner 81 and its clutch outer 82 virtually coincide with the axis Z of the transmission output shaft 45.

As described above, the boss portion 86, the drum portion 87 and the connecting wall portion 88 are integrally cast by use of the same cast iron material by casting.
In addition, a thickness td of the drum portion 87 of the clutch outer 82 is made thicker than thicknesses tw1, tw2, tw3 of the connecting wall portion 88 thereof.

Balance holes 93 for securing a rotational balance for the clutch outer 82 are processed in the outer periphery of the drum portion 87, which has the thickness td, toward the axis (center axis) Z of the clutch outer 82. The number of locations in which to process the balance holes 93 and the number of balance holes 93 are determined depending on the necessity (although one location is shown in the drawings).

Furthermore, in each balance hole 93, a remaining thickness t1 between the bottom of the balance hole 93 and the inner peripheral surface of the drum portion 87, that is to say, the cylinder-shaped friction surface 87a, as well as a remaining thickness t2 between an edge of the balance hole 93 and an end surface of the drum portion 87, are made thicker than any of the thicknesses tw1, tw2, tw3 of the connecting wall portion.

The foregoing centrifugal shoe clutch structure of Embodiment 1 brings about the following operations/workings-effects.
The boss portion 86, the drum portion 87 and the connecting wall portion 88 of the clutch outer 82 were integrally cast by use of the same cast iron material by casting. For this reason, the productivity of the clutch enhanced, and the costs decreased. In addition, unlike in the conventional case where a vibration-isolating ring was attached to the clutch outer, things such as variation in the interference width due to strain resulting from heat of the friction between the clutch outer and the clutch shoes did not occur, as well as the vibration damping effect became stable.
Furthermore, the clutch outer 82 was integrally cast by casting. For this reason, even the shape with changed directions and thicknesses was able to be formed with ease and lower costs, although the shape would entail difficulty and higher costs if the shape would be achieved by a pressing process and an assembling process. This made it possible to easily form the shape which enhanced the vibration-isolating effect. Accordingly, the enhanced vibration-isolating effect together with the cast iron's high vibration-reducing effect heightened the effect of preventing the clutch squeak.

By casting, only key portion such as the drum portion 87 was able to be formed thicker, and the connecting wall portion 88 serving as the web portion was able to be formed with the reduced thickness. This allowed the natural frequency of the clutch outer 82 to be set preferably. Accordingly, it was possible to enhance the vibration-damping effect, and concurrently to reduce the weight of the clutch outer 82.

Moreover, the balance holes 93 configured to adjust the balance of the clutch outer 82 were processed in the drum portion 87 formed thicker. This made it easy to process the balance holes 93, and made it possible to reduce the vibrations attributable to the rotation of the clutch outer 82.
Additionally, the thickness t1 of the bottom of each balance hole 93 in the drum portion 87 and the thickness t2 between each balance hole 93 and the end surface 87b of the drum portion 87 were kept larger than predetermined. Accordingly, the influence of the balancing process on the rotational strength of the clutch outer 82 was prevented.

In general, the friction members 93 made by hardening the paper-based inorganic fibers with the thermosetting resin have a relatively small coefficient of friction because of their relatively hard quality, and the clutch connection is performed at a high rotational speed for the purpose of enhancing the transmission force. Even in this case, Embodiment 1 was able to prevent the clutch squeak, because the friction members 83 were used together with the clutch outer 82 which prevented the clutch squeak.
For this reason, the friction members 83 having higher wear resistance and made by hardening the paper-based inorganic fibers with the thermosetting resin were able to be used as the friction members provided to the outer peripheral portions of the clutch shoes 84. This enhanced the durability of the centrifugal shoe clutch, and reduced the costs.

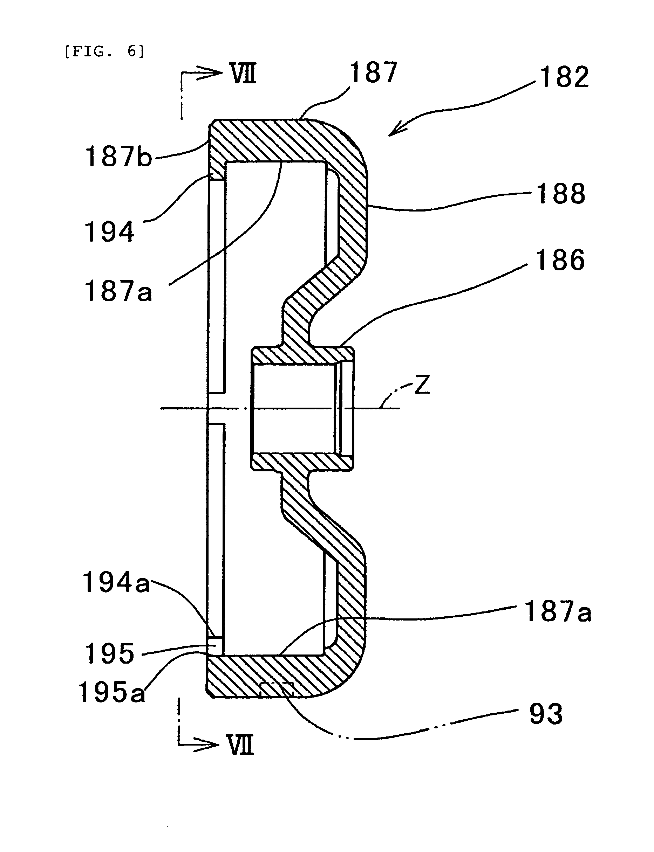

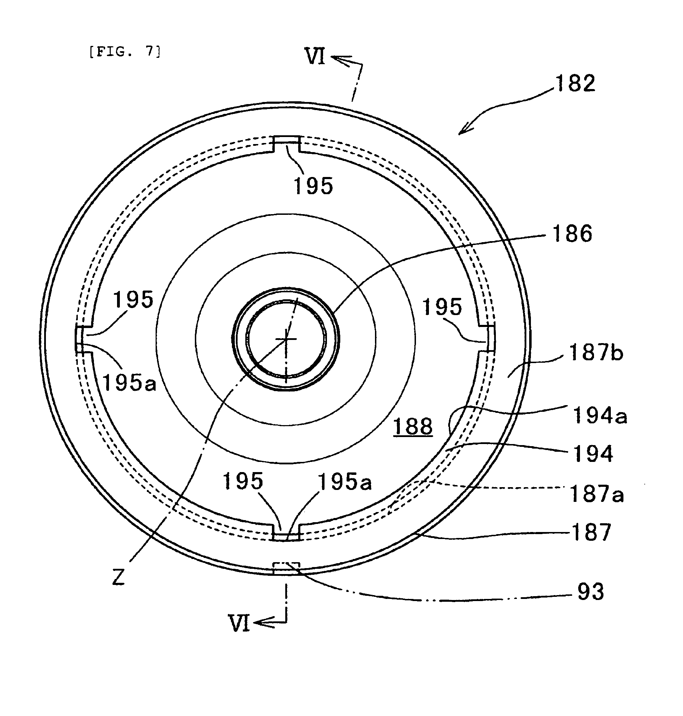

Referring to Figs. 6 and 7 each showing a clutch outer 182 of Embodiment 2 of the present invention alone, explanation will be provided for features of a centrifugal shoe clutch structure of Embodiment 2.
The clutch outer 182 of Embodiment 2 is different from the clutch outer 82 of Embodiment 1.
The rest of Embodiment 2 is virtually the same as that of Embodiment 1. For this reason, Figs. 1 to 3 will be referred to. Duplicated illustrations and explanations will be omitted.
In Figs. 6 and 7, components of Embodiment 2 which are the same as those of Embodiment 1 are denoted by the same reference numerals. Thereby, explanation of such components will be omitted. On the other hand, each of components of Embodiment 2 which corresponds to those of Embodiment 1 but will be explained discriminatingly is denoted by a reference numeral of one hundred and something whose last two digits are equal to the reference numeral of the corresponding component of Embodiment 1; each of components of Embodiment 2 which is completely different from those of Embodiment 1 is denoted by any other reference numeral of one hundred and something; and explanation will be provided mainly for what makes components of Embodiment 2 different from those of Embodiment 1.

An axis of the clutch outer 182 of Embodiment 2 virtually coincides with the axis Z of the transmission output shaft 45 as in the case of Embodiment 1.
In addition, a boss portion 186, a drum portion 187 and a connecting wall portion 188 are integrally cast by use of the same cast iron material by casting as in the case of Embodiment 1.
Furthermore, in the clutch outer 182, the thickness td of the drum portion 187 is made thicker than any one of the thicknesses tw1, tw2, tw3 of the connecting wall portion 188 (see Fig. 4) as in the case of the clutch outer which has been explained with regard to Embodiment 1.

As shown in Figs. 6 and 7, in the clutch outer 182 of Embodiment 2, a vibration-isolating wall 194 extending toward the inner periphery is integrally formed on an end surface 187b of the drum portion 187.
A cylinder-shaped friction surface 187a is formed in an inner peripheral surface of the drum portion 187 between the vibration-isolating wall 194 and the connecting wall portion 188.

Moreover, the vibration-isolating wall 194 is provided with notched grooves 195 which are recessed from its inner peripheral end 194a in an outer peripheral direction. The positions of groove bottoms 195a of the notched grooves 195 in a radial direction of the clutch outer 182 coincide with the position of the cylinder-shaped friction surface 187a in the radial direction of the clutch outer 182. Incidentally, the positions of the groove bottoms 195a in the radial direction of the clutch outer 182 may reach a position closer to the outer periphery beyond the cylinder-shaped friction surface 187a.

The foregoing centrifugal shoe clutch structure of Embodiment 2 brings about the same operations/workings-effects as does the centrifugal shoe clutch structure of Embodiment 1, and additionally brings about the following operations/workings-effects.
The vibration-isolating wall 194 was able to be easily formed integrally with the clutch outer 182 by casting. For this reason, the vibration-isolating wall 194 enhanced the vibration reducing effect, reinforced the drum portion 187, and increased the strength of the clutch outer 182.
Additionally, the notched grooves 195 were provided in the vibration-isolating wall 194. This made it possible to set the natural frequency of the vibration-isolating wall 194 satisfactorily, and made it easy to avoid resonance. Thereby, the strength and vibration-isolating performance of the clutch outer 182 were enhanced and improved in a well-balanced manner. The number of notched grooves 195 and the size of the notched grooves 195 were able to be selected on the basis of the condition.

In addition, when the bottom portions 195a of the respective notched grooves 195 are provided in a way that the bottom portions 195a reach the position of the cylinder-shaped friction surface 187a in the radial direction of the clutch outer 182 or a position closer to the outer periphery beyond the position of the cylinder-shaped friction surface 187a, abrasion powder of the friction members 83 of the centrifugal clutch shoes 84 is discharged; a frictional engagement force becomes stable; it becomes easy to control the frequency which occurs due to the sliding movement on the cylinder-shaped friction surface 187a; and it becomes easy to make a setup for avoidance of resonance between the frequency and the natural frequency of the clutch outer 182.
The vibration reducing effect is enhanced when: although not illustrated, intervals between the notched grooves 185 are unequalized; the vibration nodes are changed; and unbalance is adjusted by use of the balance holes 93.

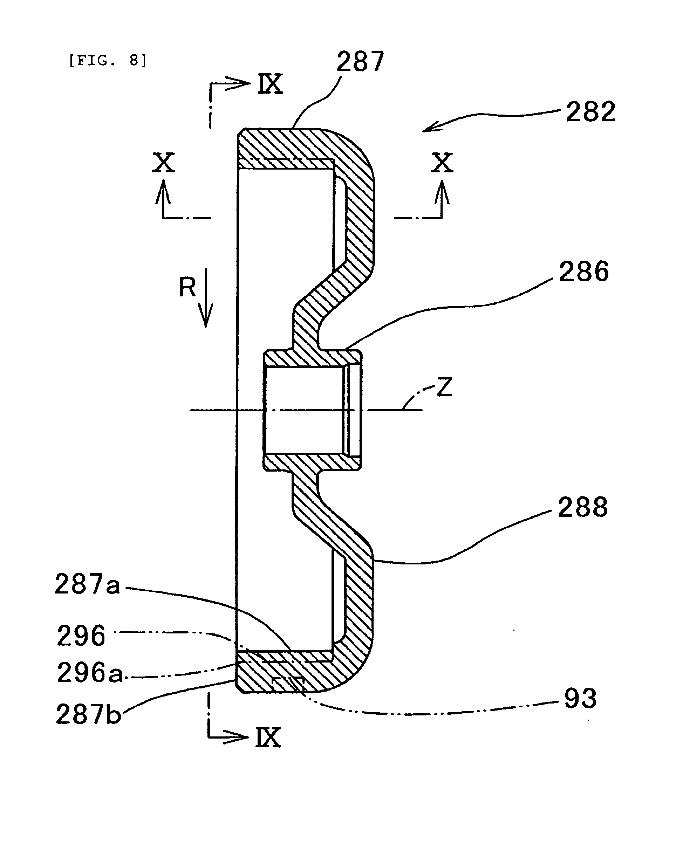

Referring to Figs. 8 to 10 each showing a clutch outer 282 of Embodiment 3 of the present invention alone, explanation will be provided for features of a centrifugal shoe clutch structure of Embodiment 3.
The clutch outer 282 of Embodiment 3 is different from the clutch outer 82 of Embodiment 1.
The rest of Embodiment 3 is virtually the same as that of Embodiment 1. For this reason, Figs. 1 to 3 will be referred to. Duplicated illustrations and explanations will be omitted.
In Figs. 8 to 10, components of Embodiment 3 which are the same as those of Embodiment 1 are denoted by the same reference numerals. Thereby, explanation of such components will be omitted. On the other hand, each of components of Embodiment 3 which corresponds to those of Embodiment 1 but will be explained discriminatingly is denoted by a reference numeral of two hundred and something whose last two digits are equal to the reference numeral of the corresponding component of Embodiment 1; each of components of Embodiment 3 which is completely different from those of Embodiment 1 is denoted by any other reference numeral of two hundred and something; and explanation will be provided mainly for what makes components of Embodiment 3 different from those of Embodiment 1.

An axis of the clutch outer 282 of Embodiment 3 virtually coincides with the axis Z of the transmission output shaft 45 as in the case of Embodiment 1.
In addition, a boss portion 286, a drum portion 287 and a connecting wall portion 288 are integrally cast by use of the same cast iron material by casting as in the case of Embodiment 1.
Furthermore, in the clutch outer 282, the thickness td of the drum portion 287 is made thicker than any one of the thicknesses tw1, tw2, tw3 of the connecting wall portion 288 (see Fig. 4) as in the case of the clutch outer which has been explained with regard to Embodiment 1.

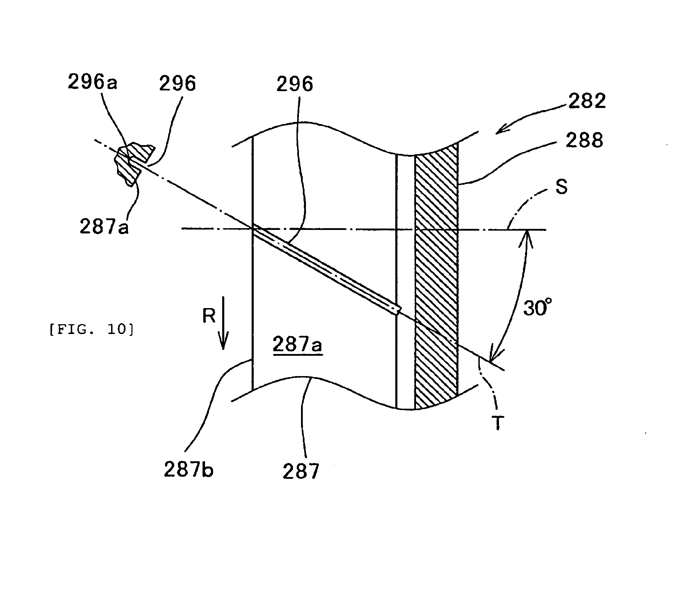

As shown in Figs. 8 to 10, in the clutch outer 282 of Embodiment 3, oblique grooves 296 are provided in a cylinder-shaped friction surface 287a of the drum portion 287. Each oblique groove 296 is oriented in an illustrated T direction which is inclined at 30 ° to an illustrated S direction parallel with the axis Z of the clutch outer 282. In other words, the cylinder-shaped friction surface 287a is provided with the oblique grooves 296 each oriented oblique to a circumferential direction (in an illustrated R direction). Incidentally, the illustration of the oblique grooves 296 in the cylinder-shaped friction surface 287a is omitted from Fig. 8 (see Fig. 10).
As shown in Fig. 10, each oblique groove 296 causes its portion closer to the connecting wall portion 288 to be positioned in an upstream side in a rotational direction (an illustrated arrow R direction) of the clutch outer 282; traverses the cylinder-shaped friction surface 287a obliquely; and penetrates an end surface 287b of the drum portion 287 in a downstream side.

The foregoing centrifugal shoe clutch structure of Embodiment 3 brings about the same operations/workings-effects as does the centrifugal shoe clutch structure of Embodiment 1, and additionally brings about the following operations/workings-effects.
The oblique grooves 296 were able to be easily formed integrally with the clutch outer 282 by casting. For this reason, the oblique grooves 296 enhanced the vibration reducing effect, and the clutch squeak was prevented.
In addition, the oblique grooves 296 made it possible to discharge abrasion powder of the friction members 83 of the respective clutch shoes 84; stabilized a frictional engagement force; made it easy to control the frequency which occurred due to the sliding movement on the cylinder-shaped friction surface 287a; and made it easy to make a setup for avoidance of its resonance with the natural frequency of the clutch outer 282.

Note that, for the purpose of discharging the abrasion powder of the friction members 83, it is desirable that each oblique groove 296 should cause its portion closer to the connecting wall portion 288 to be positioned in the upstream side in the rotational direction of the clutch outer 282; traverse the cylinder-shaped friction surface 287a obliquely; and penetrate the end surface 287b of the drum portion 287 in the downstream side.
Furthermore, if the oblique grooves 296 of Embodiment 3 are additionally provided to Embodiment 2 described above, it is desirable that: the downstream-side ends of the oblique grooves 296 should be made to coincide with the positions of the notched grooves 195 in the circumferential direction, respectively; and the groove bottoms 195a of the notched grooves 195 should be positioned in portions closer to the outer periphery beyond groove bottoms 296a of the oblique grooves 296, respectively.

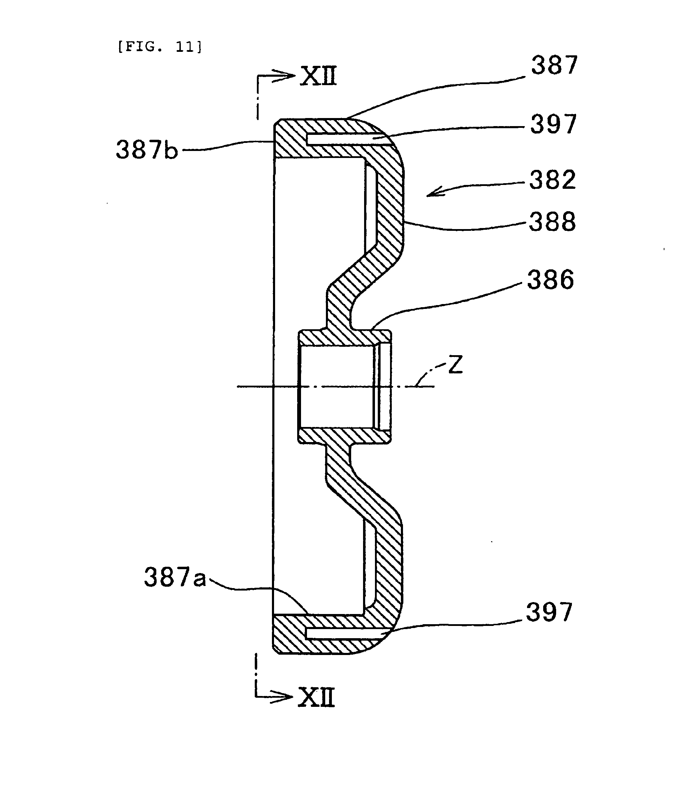

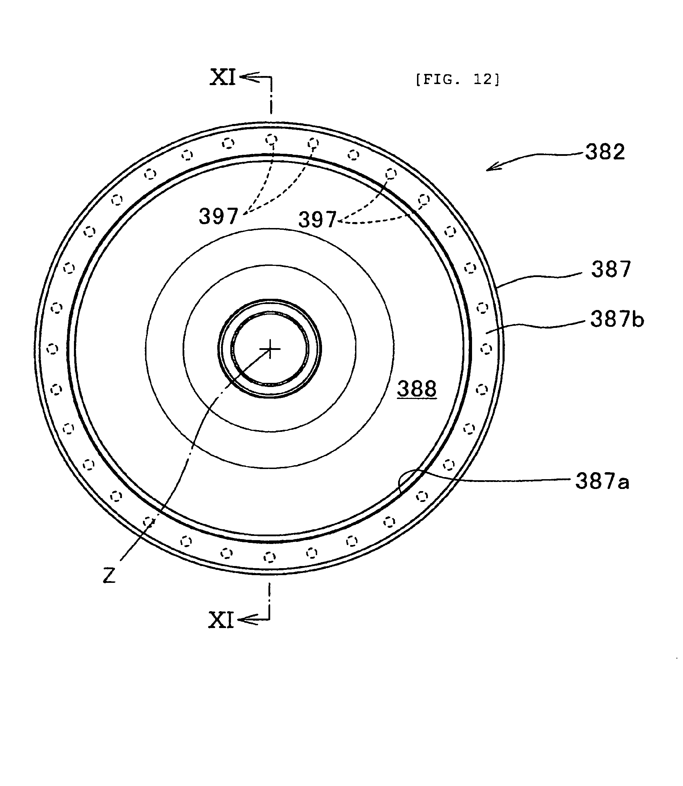

Referring to Figs. 11 and 12 each showing a clutch outer 382 of Embodiment 4 of the present invention alone, explanation will be provided for features of a centrifugal shoe clutch structure of Embodiment 4.
The clutch outer 382 of Embodiment 4 is different from the clutch outer 82 of Embodiment 1.
The rest of Embodiment 4 is virtually the same as that of Embodiment 1. For this reason, Figs. 1 to 3 will be referred to. Duplicated illustrations and explanations will be omitted.
In Figs. 11 and 12, components of Embodiment 4 which are the same as those of Embodiment 1 are denoted by the same reference numerals. Thereby, explanation of such components will be omitted. On the other hand, each of components of Embodiment 4 which corresponds to those of Embodiment 1 but will be explained discriminatingly is denoted by a reference numeral of three hundred and something whose last two digits are equal to the reference numeral of the corresponding component of Embodiment 1; each of components of Embodiment 4 which is completely different from those of Embodiment 1 is denoted by any other reference numeral of three hundred and something; and explanation will be provided mainly for what makes components of Embodiment 4 different from those of Embodiment 1.

An axis of the clutch outer 382 of Embodiment 4 virtually coincides with the axis Z of the transmission output shaft 45 as in the case of Embodiment 1.
In addition, a boss portion 386, a drum portion 387 and a connecting wall portion 388 are integrally cast by use of the same cast iron material by casting as in the case of Embodiment 1.
Furthermore, in the clutch outer 382, the thickness td of the drum portion 387 is made thicker than any one of the thicknesses tw1, tw2, tw3 of the connecting wall portion 188 (see Fig. 4) as in the case of the clutch outer which has been explained with regard to Embodiment 1. An inner peripheral surface of the drum portion 387 forms a cylinder-shaped friction surface 387a.

As shown in Figs. 11 and 12, in the clutch outer 382 of Embodiment 4, the drum portion 387 is provided with natural frequency adjusting holes 397 at equal intervals in a circumferential direction of the drum portion 387. The natural frequency adjusting holes 397 extend in an axial (center axial) Z direction of the clutch outer 382.
Furthermore, the natural frequency adjusting holes 397 are provided in a portion of the drum portion 387, which continues to the connecting wall portion 388, in order that an end surface portion 387b of the drum portion 387 should not be opened.

Note that, although Figs. 11 and 12 show the natural frequency adjusting holes 397 as holes whose cross sections are round, the natural frequency adjusting holes 397 may be holes whose cross sections are oval.
Moreover, although the illustration of the balance holes 93 is omitted from Figs. 11 and 12, the balance holes 93 are processed as in the case of Embodiment 1. The positions of the balance holes 93 and the number of balance holes 93 are determined depending on the necessity.

The foregoing centrifugal shoe clutch structure of Embodiment 4 brings about the same operations/workings-effects as does the centrifugal shoe clutch structure of Embodiment 1, and additionally brings about the following operations/workings-effects.
When the natural frequency of the clutch outer 382 was set up preferably by use of the natural frequency adjusting holes 397, the clutch squeak resulting from the resonance with the frequency which occurred due to the sliding movement on the clutch shoes 84 during the clutch connection was prevented.
In addition, because of the structure in which the end surface portion 387b of the drum portion 387 was closed, stress was inhibited from increasing in the end surface portion 387b, and the clutch squeak was prevented.

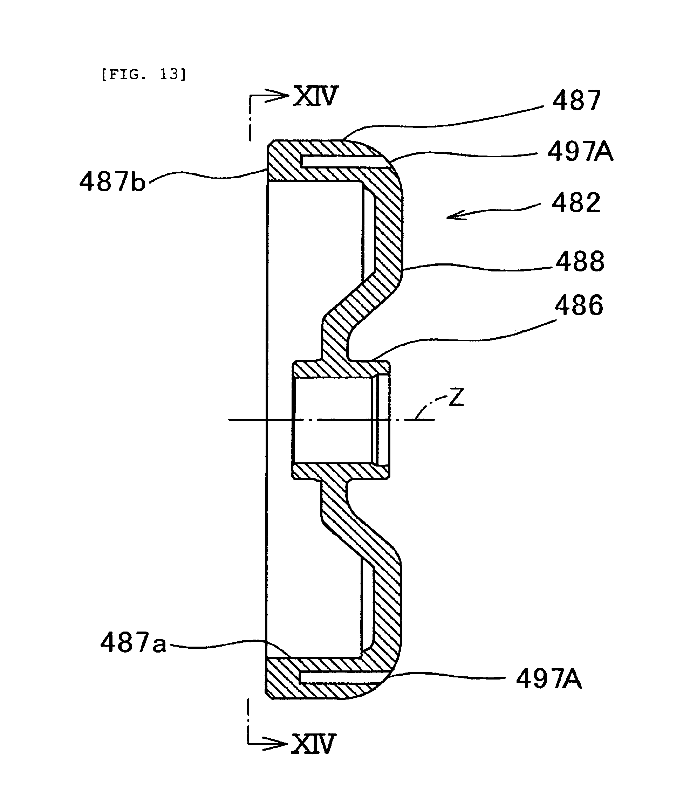

Referring to Figs. 13 to 16 each showing a clutch outer 482 of Embodiment 5 of the present invention alone, explanation will be provided for features of a centrifugal shoe clutch structure of Embodiment 5.
The clutch outer 482 of Embodiment 5 is different from the clutch outer 82 of Embodiment 1.
The rest of Embodiment 5 is virtually the same as that of Embodiment 1. For this reason, Figs. 1 to 3 will be referred to. Duplicated illustrations and explanations will be omitted.
In Figs. 13 to 16, components of Embodiment 5 which are the same as those of Embodiment 1 are denoted by the same reference numerals. Thereby, explanation of such components will be omitted. On the other hand, each of components of Embodiment 5 which corresponds to those of Embodiment 1 but will be explained discriminatingly is denoted by a reference numeral of four hundred and something whose last two digits are equal to the reference numeral of the corresponding component of Embodiment 1; each of components of Embodiment 5 which is completely different from those of Embodiment 1 is denoted by any other reference numeral of four hundred and something; and explanation will be provided mainly for what makes components of Embodiment 5 different from those of Embodiment 1.

An axis of the clutch outer 482 of Embodiment 5 virtually coincides with the axis Z of the transmission output shaft 45 as in the case of Embodiment 1.
In addition, a boss portion 486, a drum portion 487 and a connecting wall portion 488 are integrally cast by use of the same cast iron material by casting as in the case of Embodiment 1.
Furthermore, in the clutch outer 482, the thickness td of the drum portion 487 is made thicker than any one of the thicknesses tw1, tw2, tw3 of the connecting wall portion 388 (see Fig. 4) as in the case of the clutch outer which has been explained with regard to Embodiment 1. An inner peripheral surface of the drum portion 487 forms a cylinder-shaped friction surface 487a.

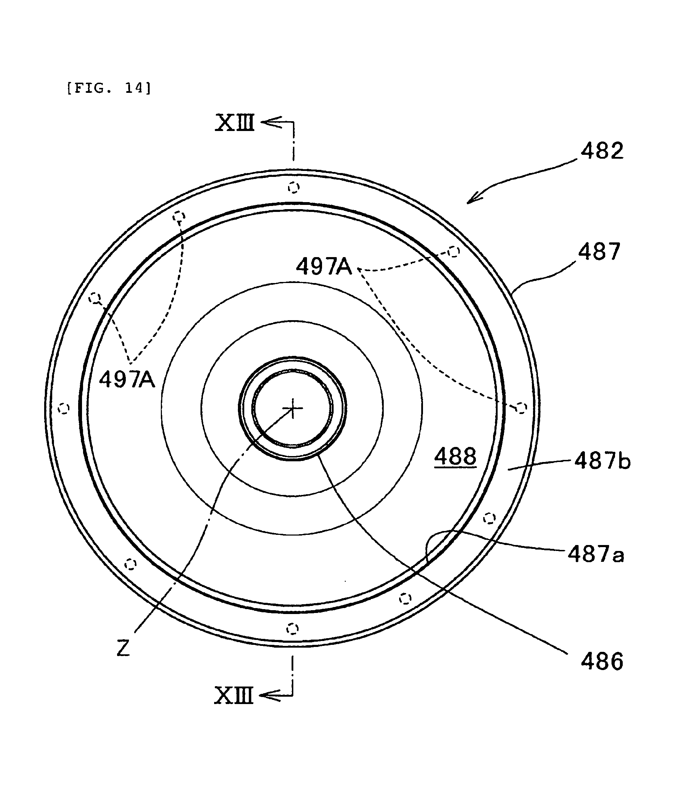

As shown in Figs. 13 and 14, in the clutch outer 482 of Embodiment 5, in the drum portion 487 is provided with natural frequency adjusting holes 497A which extend in an axial (center axial) Z direction of the clutch outer 482. The natural frequency adjusting holes 497A are holes whose cross sections are round.
Furthermore, the natural frequency adjusting holes 497A are provided in a portion of the drum portion 487, which continues to the connecting wall portion 488, in order that an end surface portion 487b of the drum portion 487 should not be opened.

Moreover, as shown in Fig. 14, the natural frequency adjusting holes 497A are provided in a way that the phases of the respective natural frequency adjusting holes 497A are unequal in the circumferential direction of the drum portion 487. In the front view shown in Fig. 14, the natural frequency adjusting holes 497A are provided with a pitch of 45° in the right upper quarter and the left lower quarter, and with a pitch of 30° in the left upper quarter and the right lower quarter.
In other words, the natural frequency adjusting holes 497A are placed point-symmetrically with the axis Z of the clutch outer 482, but at unequal intervals in the circumferential direction of the clutch outer 482.

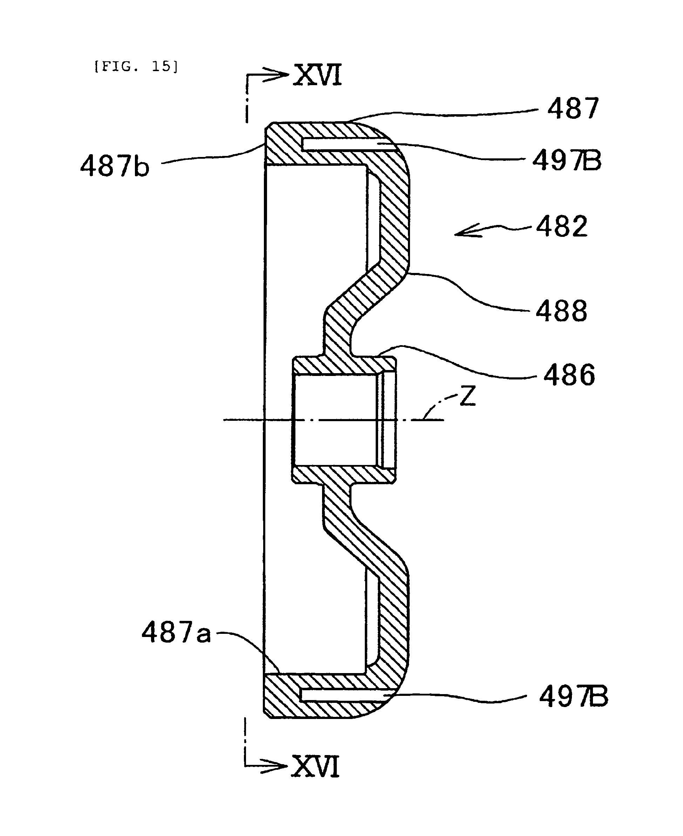

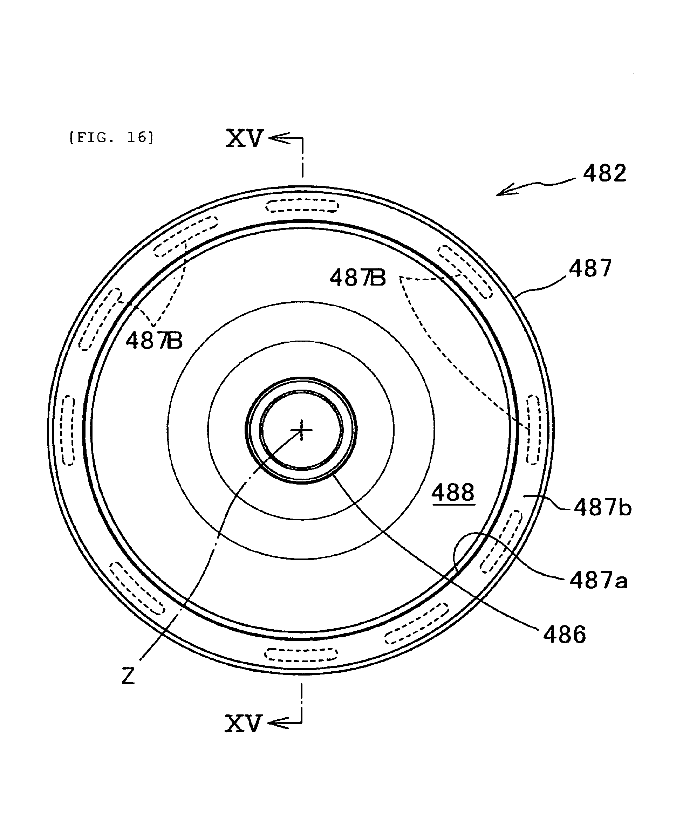

What is shown in Figs. 15 and 16 is a modification of Embodiment 5.
In this modification, instead of the natural frequency adjusting holes 497A whose cross sections are round, natural frequency adjusting holes 497B whose cross sections are oval are provided to the drum portion 487 in the axial (center axial) Z direction of the clutch outer 482.
The rest of the modification is the same as that of Embodiment 5. The natural frequency adjusting holes 497B are provided in the portion of the drum portion 487, which continues to the connecting wall portion 488, in order that the end surface portion 487b of the drum portion 487 should not be opened.

Moreover, as shown in Fig. 16, the natural frequency adjusting holes 497B are provided in a way that the phases of the respective natural frequency adjusting holes 497B are unequal in the circumferential direction of the drum portion 487. In the front view shown in Fig. 16, the natural frequency adjusting holes 497B are provided with a pitch of 45° in the right upper quarter and the left lower quarter, and with a pitch of 30° in the left upper quarter and the right lower quarter.
In other words, the natural frequency adjusting holes 497B are placed point-symmetrically with the axis Z of the clutch outer 482, but at unequal intervals in the circumferential direction of the clutch outer 482.
Note that, although the illustration of the balance holes 93 is omitted from Figs. 15 and 16, the balance holes 93 are processed as in the case of Embodiment 1. The positions of the balance holes 93 and the number of balance holes 93 are determined depending on the necessity.

The foregoing centrifugal shoe clutch structure of Embodiment 5 brings about the same operations/workings-effects as does the centrifugal shoe clutch structure of Embodiment 1, and additionally brings about the following operations/workings-effects.
When the natural frequency of the clutch outer 482 was set up preferably by use of the natural frequency adjusting holes 497A or the natural frequency adjusting holes 497B, the clutch squeak resulting from the resonance with the frequency which occurred due to the sliding movement on the clutch shoes 84 during the clutch connection was prevented.
Because of the placement at unequal intervals in the circumferential direction, the natural vibration of the clutch outer 482 was inhibited, and the resonance with the frequency which occurred due to the sliding movement on the clutch shoes 84 was inhibited more, as well as the clutch squeak was reduced more.
In addition, because of the structure in which the end surface portion 487b of the drum portion 487 was closed, stress was inhibited from increasing in the end surface portion 487b, and the clutch squeak was prevented.

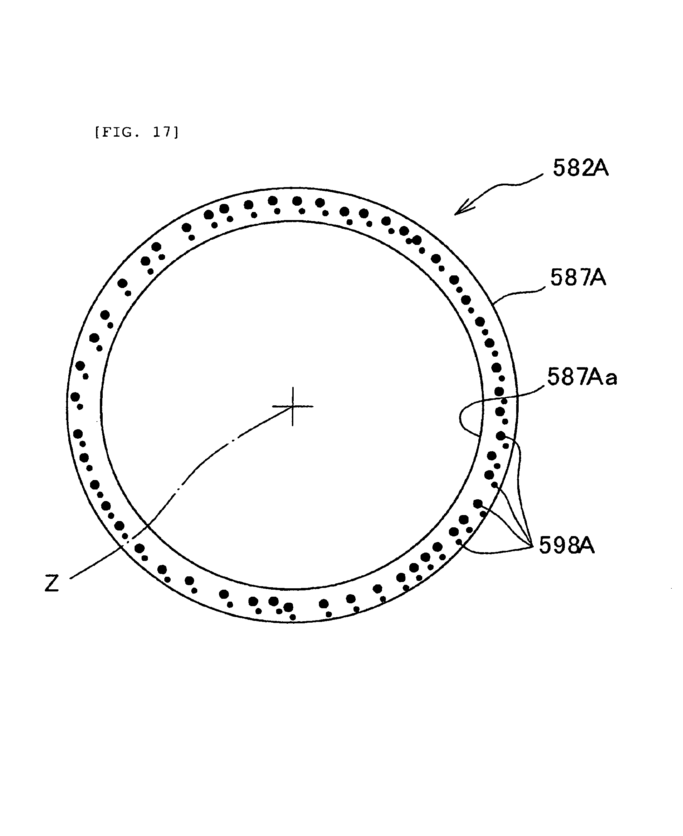

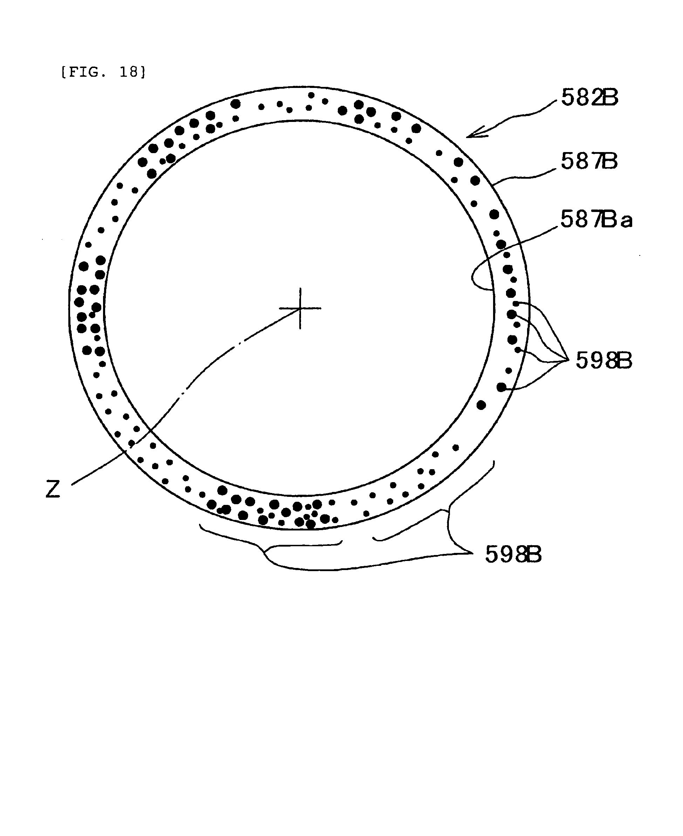

Referring to Figs. 17 and 18 respectively showing a clutch outer 582A and a clutch outer 582B of Embodiment 6 of the present invention alone, explanation will be provided for features of a centrifugal shoe clutch structure of Embodiment 6.
In Embodiment 6, the cast iron material of the clutch outer 582A or the clutch outer 582B is a spheroidal graphite cast iron. The clutch outer 582A or the clutch outer 582B is formed in a way that a spheroidal graphite 598A or a spheroidal graphite 598B contained therein is distributed unevenly in the circumferential direction of a drum portion 587A or a drum portion 587B.

The rest of Embodiment 6 is the same as that of each of Embodiment 1 to Embodiment 5. For this reason, the drawings related to each embodiment will be referred to. Duplicated illustrations and explanations will be omitted.
Furthermore, components of Example 6 which are the same as those of the other embodiments are denoted by the same reference numerals. Thereby, explanation of such components will be omitted. On the other hand, each of components of Example 6 which corresponds to those of the other embodiments but will be explained discriminatingly is denoted by a reference numeral of five hundred and something whose last two digits are equal to the reference numeral of the corresponding component of the other embodiments; each of components of Example 6 which is completely different from those of the other embodiments is denoted by any other reference numeral of five hundred and something; and explanation will be provided mainly for what makes components of Example 6 different from those of the other embodiments.

Fig. 17 schematically shows a front cross section of the drum portion 587A of the clutch outer 582A of Embodiment 6. The state of distribution of the spheroidal graphite 598A contained in the spheroidal graphite cast iron as the cast iron material of the drum portion 587A is schematically shown in the cross section.
It is a matter of course that the cross-sectional dimension of the drum portion 587A and the cross-sectional dimension of the spheroidal graphite 598A are too different in range to be illustrated simultaneously. For this reason, Fig. 17 only shows an image of the distribution of the spheroidal graphite 598A in the circumferential direction of the drum portion 587A.

In the drum portion 587A shown in Fig. 17, particles of the spheroidal graphite 598A are not uniform in size. Thus, the clutch outer 582A is formed in a way that the spheroidal graphite 598A contained therein is unevenly distributed in the circumferential direction of the drum portion 587A.

Fig. 18 schematically shows a front cross section of the drum portion 587B of the clutch outer 582B of Embodiment 6. The state of distribution of the spheroidal graphite 598B contained in the spheroidal graphite cast iron as the cast iron material of the drum portion 587B is schematically shown in the cross section.
It is a matter of course that the cross-sectional dimension of the drum portion 587B and the cross-sectional dimension of the spheroidal graphite 598B are too different in range to be illustrated simultaneously. For this reason, Fig. 18 only shows an image of the distribution of the spheroidal graphite 598B in the circumferential direction of the drum portion 587B.

In the drum portion 587B shown in Fig. 18, particles of the spheroidal graphite 598B are not uniform in size. Thus, the clutch outer 582B is formed in a way that the spheroidal graphite 598B contained therein is unevenly distributed in the circumferential direction of the drum portion 587B.

In other words, Embodiment 6 is that which is obtained by adding the configuration of the clutch outer 582A or the clutch outer 582B of Embodiment 6 to the configurations of the clutch outers 82, 182, 282, 382, 482 of Embodiments 1 to 5.

The foregoing centrifugal shoe clutch structure of Embodiment 6 brings about the same operations/workings-effects as does the centrifugal shoe clutch structure of any one of Embodiments 1 to 5, and additionally brings about the following operations/workings-effects.
Because the spheroidal graphite cast iron was used as the cast iron material, the strength of the clutch outer 582A or the clutch outer 582B was increased. In addition, the lubrication action of the spheroidal graphite 598A or the spheroidal graphite 598B, which was the internal component of the clutch outer 582A or the clutch outer 582B made of the spheroidal graphite cast iron, stabilized the characteristics of the sliding of the clutch shoes 84 on the cylinder-shaped friction surface 587Aa or the cylinder-shaped friction surface 587Ba. The lubrication action of the spheroidal graphite 598A or the spheroidal graphite 598B thus made it easy to control the frequency which occurred due to the sliding movement thereon, as well as accordingly made it easy to make a setup for avoidance of the resonance with the natural frequency of the clutch outer 582A or the clutch outer 582B. Furthermore, the vibration damping effect resulting from the change in the density of the spheroidal graphite 598A or the spheroidal graphite 598B depending on the locations enhanced the effect of preventing the clutch squeak.

Moreover, in the clutch outer 582A or the clutch outer 582B of Embodiment 6, the cylinder-shaped friction surface 578Aa of the drum portion 587A or the cylinder-shaped friction surface 578Ba of the drum portion 587B is shaped like a cylinder by machining.
For this reason, the clutch outers 82, 182, 282, 382 482 of Embodiments 1 to 5 additionally having such a constitution are cast by use of the spheroidal graphite cast iron. In addition, the cylinder-shaped friction surfaces 87a, 187a, 287a, 387a, 487a of the respective drum portions 87, 187, 287, 387, 487 are shaped like a cylinder by machining.
In such a case, from the beginning, the spheroidal graphite 598A or the spheroidal graphite 598B is exposed in the cylinder-shaped friction surfaces 87a, 187a, 287a, 387a, 487a, 578Aa, 578Ba by machining. Accordingly, the characteristic of preventing the clutch squeak can be kept high from the beginning of the use of the clutch.

The foregoing explanations have been provided for the embodiments of the present invention, but the present invention is not limited to the above-described embodiments. Various aspects and changes can be applied to the present invention within a range of the gist described in the scope of claims.
For example, a power unit to be mounted on a vehicle, particularly a scooter-type motorcycle, has been shown as an example of the power unit including the centrifugal shoe clutch structure of the present invention. Although, however, such an application exerts the features of the present invention effectively, the present invention is not limited to such an example.
The present invention may be applied to not only motorcycles, but also various vehicles on which a power unit including a similar centrifugal shoe clutch is mounted. The present invention may be applied to vehicles whose internal combustion engine has a different mode or a different number of cylinders. Moreover, it goes without saying that the present invention may be applied to power units other than vehicle-mounted power units, too, as long as the power units include a similar centrifugal shoe clutch.
Furthermore, the type, placement order and orientation of the transmission system in front of the centrifugal shoe clutch, as well as the direction of the end surface of the drum portion of the clutch outer with respect to the clutch inner, are not limited to those of the foregoing embodiments.

### [Explanation of the Reference Numerals]

1 ... internal combustion engine
2 ... transmission system
3 ... power unit
4 ... crankshaft
5 ... crankcase
6 ... cylinder unit
19 ... rear wheel
20L ... left rear arm
20R ... right rear arm
21 ... transmission case
40 ... transmission
41 ... deceleration gear train
42 ... driving pulley
43 ... driven pulley
44 ... endless belt
45 ... transmission output shaft (output rotary member)
55 ... rotary cylinder (input rotary member)
56 ... fixation-side pulley half body
57 ... movable-side pulley half body
80 ... centrifugal shoe clutch
81 ... clutch inner
82, 182, 282, 382, 482, 582A, 582B ... clutch outer
83 ... friction member
84 ... centrifugal clutch shoe (clutch shoe)
84a ... base portion
84b ... intermediate portion
85 ... clutch spring
86, 186, 286, 386, 486 ... boss portion
87, 187, 287, 387, 487, 587A, 587B ... drum portion
87a, 187a, 287a, 387a, 487a, 587Aa, 587Ba ... cylinder-shaped friction surface (inner peripheral surface)
87b, 187b, 287b ... end surface
387b, 487b ... end surface portion
88, 188, 288, 388, 488 ... connecting wall portion
90 ... support pin
91 ... side plate
93 ... balance hole
182 ... clutch outer
194 ... vibration-isolating wall
194a ... inner peripheral end
195 ... notched groove
296 ... oblique groove
397, 497A, 497B ... natural frequency adjusting hole
598A, 598B ... spheroidal graphite

## Claims

1. A centrifugal shoe clutch structure comprising :
a clutch inner (81) configured to rotatably hold a plurality of clutch shoes (84) respectively including friction members (83), and connected to an input rotary member (55); and
a clutch outer (82) connected to an output rotary member (45), provided surrounding an outer periphery of the clutch inner (81), configured to be connected to the clutch inner (81) in accordance with rotation of the clutch shoes (84) in an outer peripheral direction due to a centrifugal force, and thereby a rotary driving force of the clutch inner (81) being transmitted to the clutch outer (82),
wherein
the clutch outer (82) includes: a boss portion (86) fitted to the output rotary member (45); a drum portion (87) whose inner peripheral surface constitutes a cylinder-shaped friction surface (87a) configured to come into contact with the clutch shoes (84); and a connecting wall portion (88) connecting the boss portion (86) and the drum portion (87) together,
the boss portion (86), the drum portion (87) and the connecting wall portion (88) are integrally cast by use of the same cast iron material by casting,
**characterized in that**
in the clutch outer (82), a thickness of the drum portion (87) is made thicker than a thickness of the connecting wall portion (88), and **in that**
a balance hole (93) extending toward an axis of the clutch outer (82) is processed in an outer periphery of the drum portion (87).

2. The centrifugal shoe clutch structure according to claim 1, wherein
in the balance hole (93), a remaining thickness between a bottom of the balance hole (93) and the inner peripheral surface of the drum portion (87) and a remaining thickness between an edge of the balance hole (93) and an end surface of the drum portion (87) both are thicker than the thickness of the connecting wall portion (88).

3. The centrifugal shoe clutch structure according to claim 1, wherein
a vibration-isolating wall (194) extending toward an inner periphery is integrally formed on the end surface of the drum portion (187).

4. The centrifugal shoe clutch structure according to claim 3, wherein
the vibration-isolating wall (194) is provided with a notched groove (195) which is recessed from its inner peripheral end (194a) in the outer peripheral direction.

5. The centrifugal shoe clutch structure according to claim 1, wherein
the cylinder-shaped friction surface (287a) of the drum portion (287) is provided with oblique grooves (296) which are oriented oblique to the circumferential direction.

6. The centrifugal shoe clutch structure according to claim 1, wherein
the drum portion (387) is provided with natural frequency adjusting holes (397) which extend in an axial direction of the clutch outer (382).

7. The centrifugal shoe clutch structure according to claim 6, wherein
the natural frequency adjusting holes (497A, 497B) are provided in a way that their phases in a circumferential direction of the drum portion (487) are set up in unequal intervals.

8. The centrifugal shoe clutch structure according to any one of claims 6 and 7, wherein
the natural frequency adjusting holes (397) are provided in a portion of the drum portion (387), which continues to the connecting wall portion (388), in order that an end surface portion (387b) of the drum portion (387) is not opened.

9. The centrifugal shoe clutch structure according to any one of claims 1 to 8, wherein
the friction members (83) are those which are made by hardening paper-based inorganic fibers with a thermosetting resin, and are provided on outer peripheries of the clutch shoes (84), respectively.

10. The centrifugal shoe clutch structure according to any one of the claims 1 to 9, wherein
the cast iron material is a spheroidal graphite cast iron, and
the clutch outer (582A, 582B) is formed in a way that spheroidal graphite (598A, 598B) contained therein is distributed unevenly in the circumferential direction of the drum portion (587A, 587B).

11. The centrifugal shoe clutch structure according to claim 10, wherein
the cylinder-shaped friction surface (587Aa, 587Ba) of the drum portion (587A, 587B) is shaped like a cylinder by machining.

## Patentansprüche

1. Zentrifugale Schuhkupplungs-Struktur, umfassend:
einen inneren Kupplungsring (81), welcher dazu eingerichtet ist, eine Mehrzahl von Kupplungsschuhen (84), welche jeweils Reibungs-Elemente (83) umfassen, rotierbar zu halten, und welcher mit einem Eingabe-Rotationselement (55) verbunden ist; und
einen äußeren Kupplungsring (82), welcher mit einem Ausgabe-Rotationselement (45) verbunden ist, welcher einen Außenumfang des inneren Kupplungsrings (81) umgebend bereitgestellt ist, welcher dazu eingerichtet ist, mit dem inneren Kupplungsring gemäß einer Rotation der Kupplungsschuhe (84) in einer Außenumfangs-Richtung aufgrund einer Zentrifugalkraft verbunden zu sein, und wobei eine Rotations-Antriebskraft des inneren Kupplungsrings (81) auf den äußeren Kupplungsring (82) übertragen wird,
wobei
der äußere Kupplungsring (82) umfasst: einen an das Ausgabe-Rotationselement (45) angepassten Vorsprungs-Abschnitt (86); einen Trommel-Abschnitt (87), dessen Innenumfangs-Fläche eine zylinderförmige Reibungsfläche (87a) bildet, welche dazu eingerichtet ist, mit den Kupplungsschuhen (84) in Kontakt zu kommen; und einen Verbindungs-Wandabschnitt (88), welcher den Vorsprungs-Abschnitt (86) und den Trommel-Abschnitt (87) miteinander verbindet,
wobei der Vorsprungs-Abschnitt (86), der Trommel-Abschnitt (87) und der Verbindungs-Wandabschnitt (88) integral unter Verwendung des gleichen Gusseisen-Materials durch Gießen gegossen werden,
**dadurch gekennzeichnet, dass** in dem äußeren Kupplungsring (82) eine Dicke des Trommel-Abschnitts (87) dicker als eine Dicke des Verbindungs-Wandabschnitts (88) gemacht wird, und dadurch, dass ein Ausgleichsloch (93), welches sich in Richtung einer Achse des äußeren Kupplungsrings (82) erstreckt, in einen Außenumfang des Trommel-Abschnitts (87) eingearbeitet wird.

2. Zentrifugale Schuhkupplungs-Struktur nach Anspruch 1, wobei in dem Ausgleichsloch (93) eine Rest-Dicke zwischen einem Boden des Ausgleichslochs (93) und der Innenumfangs-Fläche des Trommelabschnitts (87), und eine Rest-Dicke zwischen einem Rand des Ausgleichslochs (93) und einer End-Fläche des Trommelabschnitts (87) beide dicker sind als die Dicke des Verbindungs-Wandabschnitts (88).

3. Zentrifugale Schuhkupplungs-Struktur nach Anspruch 1, wobei eine Vibrations-Isolationswand (194), welche sich in Richtung eines Innenumfangs erstreckt, integral an der End-Fläche des Trommel-Abschnitts (187) gebildet ist.

4. Zentrifugale Schuhkupplungs-Struktur nach Anspruch 3, wobei die Vibrations-Isolationswand (194) mit einer gekerbten Rille (195) bereitgestellt ist, welche sich von ihrem Innenumfangs-Ende (194a) in die Außenumfangs-Richtung vertieft.

5. Zentrifugale Schuhkupplungs-Struktur nach Anspruch 1, wobei die zylinderförmige Reibungsfläche (287a) des Trommel-Abschnitts (287) mit schrägen Rillen (296) bereitgestellt ist, welche schräg zu der Umfangsrichtung orientiert sind.

6. Zentrifugale Schuhkupplungs-Struktur nach Anspruch 1, wobei der Trommel-Abschnitt (387) mit Eigenfrequenz-Anpassungslöchern (397) bereitgestellt ist, welche sich in einer axialen Richtung des äußeren Kupplungsrings (382) erstrecken.

7. Zentrifugale Schuhkupplungs-Struktur nach Anspruch 6, wobei die Eigenfrequenz-Anpassungslöcher (487A, 497B) derart bereitgestellt sind, dass ihre Phasen in einer Umfangsrichtung des Trommel-Abschnitts (487) in ungleichen Abständen angeordnet sind.

8. Zentrifugale Schuhkupplungs-Struktur nach einem der Ansprüche 6 und 7, wobei
die Eigenfrequenz-Anpassungslöcher (397) in einem Abschnitt des Trommel-Abschnitts (387) bereitgestellt sind, welcher sich zu dem Verbindungs-Wandabschnitt (388) fortsetzt, um einen Endflächen-Abschnitt (387b) des Trommel-Abschnitts (387) nicht zu öffnen.

9. Zentrifugale Schuhkupplungs-Struktur nach einem der Ansprüche 1 bis 8, wobei
die Reibungs-Elemente (83) solche sind, die durch Härten von papierbasierten anorganischen Fasern mit einem wärmehärtenden Harz hergestellt werden, und jeweils an Außenumfängen der Kupplungsschuhe (84) bereitgestellt sind.

10. Zentrifugale Schuhkupplungs-Struktur nach einem der Ansprüche 1 bis 9, wobei
das Gusseisen-Material ein Gusseisen mit Kugelgraphit ist, und
der äußere Kupplungsring (582A, 582B) derart gebildet wird, dass Kugelgraphit (598A, 598B), welcher darin enthalten ist, ungleichmäßig in der Umfangsrichtung des Trommelabschnitts (587A, 587B) verteilt ist.

11. Zentrifugale Schuhkupplungs-Struktur nach Anspruch 10, wobei die zylinderförmige Reibungsfläche (587Aa, 587Ba) des Trommel-Abschnitts (587A, 587B) durch Bearbeitung wie ein Zylinder geformt ist.

## Revendications

1. Structure d'embrayage à patin centrifuge, comprenant :
un embrayage interne (81) configuré pour maintenir en rotation une pluralité de patins d'embrayage (84) comprenant respectivement des éléments de friction (83), et raccordé à un élément rotatif d'entrée (55) ; et
un embrayage externe (82) raccordé à un élément rotatif de sortie (45) entourant une périphérie externe de l'embrayage interne (81), configuré pour être raccordé à l'embrayage interne (81) selon la rotation des patins d'embrayage (84) dans une direction périphérique externe en raison d'une force centrifuge, et moyennant quoi une force d'entraînement rotative de l'embrayage interne (81) est transmise à l'embrayage externe (82),
dans laquelle
l'embrayage externe (82) comprend : une partie formant bosse (86) montée sur l'élément rotatif de sortie (45) ; une partie de tambour (87) dont la surface périphérique interne constitue une surface de friction en forme de cylindre (87a) configurée pour venir en contact avec les patins d'embrayage (84) ; et une partie de paroi de raccordement (88) raccordant ensemble la partie formant bosse (86) et la partie de tambour (87),
la partie formant bosse (86), la partie de tambour (87) et la partie de paroi de raccordement (88) sont coulées d'une seule pièce à l'aide du même matériau de fonte par coulage,
**caractérisée en ce que**
dans l'embrayage externe (82), une épaisseur de la partie de tambour (87) est plus épaisse qu'une épaisseur de la partie de paroi de raccordement (88), et **en ce que**
un trou d'équilibrage (93) s'étendant vers un axe de l'embrayage externe (82) est réalisé dans une périphérie externe de la partie de tambour (87).

2. Structure d'embrayage à patin centrifuge selon la revendication 1, dans laquelle
dans le trou d'équilibrage (93), une épaisseur résiduelle entre un fond du trou d'équilibrage (93) et la surface périphérique interne de la partie de tambour (87) et une épaisseur résiduelle entre un bord du trou d'équilibrage (93) et une surface d'extrémité de la partie de tambour (87) sont toutes deux plus épaisses que l'épaisseur de la partie de paroi de raccordement (88).

3. Structure d'embrayage à patin centrifuge selon la revendication 1, dans laquelle
une paroi d'isolation de vibration (194) s'étendant vers une périphérie interne est intégralement formée sur la surface d'extrémité de la partie de tambour (187).

4. Structure d'embrayage à patin centrifuge selon la revendication 3, dans laquelle
la paroi d'isolation de vibration (194) est prévue avec une rainure crantée (195) qui est en retrait par rapport à son extrémité périphérique interne (194a) dans la direction périphérique externe.

5. Structure d'embrayage à patin centrifuge selon la revendication 1, dans laquelle
la surface de friction en forme de cylindre (287a) de la partie de tambour (287) est prévue avec des rainures obliques (296) qui sont orientées de manière oblique par rapport à la direction circonférentielle.

6. Structure d'embrayage à patin centrifuge selon la revendication 1, dans laquelle
la partie de tambour (387) est prévue avec des trous d'ajustement de fréquences propres (397) qui s'étendent dans une direction axiale de l'embrayage externe (382).

7. Structure d'embrayage à patin centrifuge selon la revendication 6, dans laquelle
les trous d'ajustement de fréquences propres (497A, 497B) sont prévus de sorte que leurs phases dans une direction circonférentielle de la partie de tambour (487) sont réglées à intervalles inégaux.

8. Structure d'embrayage à patin centrifuge selon l'une quelconque des revendications 6 et 7, dans laquelle
les trous d'ajustement de fréquences propres (397) sont prévus dans une portion de la partie de tambour (387) qui continue vers la partie de paroi de raccordement (388), de sorte qu'une partie de surface d'extrémité (387b) de la partie de tambour (387) n'est pas ouverte.

9. Structure d'embrayage à patin centrifuge selon l'une quelconque des revendications 1 à 8, dans laquelle
les éléments de friction (83) sont ceux qui sont réalisés en faisant durcir des fibres inorganiques à base de papier avec une résine thermodurcissable, et sont prévus sur les périphéries externes des patins d'embrayage (84), respectivement.

10. Structure d'embrayage à patin centrifuge selon l'une quelconque des revendications 1 à 9, dans laquelle
le matériau en fonte est une fonte à graphite sphéroïdal, et
l'embrayage externe (582A, 582B) est formé de sorte que le graphite sphénoïdal (598A, 598B) contenu à l'intérieur de ce dernier est réparti irrégulièrement dans la direction circonférentielle de la partie de tambour (587A, 587B).

11. Structure d'embrayage à patin centrifuge selon la revendication 10, dans laquelle
la surface de friction en forme de cylindre (587Aa, 587Ba) de la partie de tambour (587A, 587B) est formée comme un cylindre par usinage.
